# EUROPEAN PATENT APPLICATION

(11) **EP 3 533 840 A1**
(43) Date of publication of application: **04.09.2019**
(21) Application number: 17864043.9
(22) Date of filing: 25.10.2017
(51) Int. Cl.: C08L 101/00, C08G 18/40, C08J 5/00, C08K 5/00

(54) **THERMOPLASTIC RESIN COMPOSITION INCLUDING COMPOUND HAVING FUNCTIONAL GROUPS FORMING AT LEAST TWO HYDROGEN BONDS WITH EACH OTHER**

(30) Priority: 31.10.2016 JP 2016212907; 21.02.2017 JP 2017029801; 24.02.2017 JP 2017032765; 28.04.2017 JP 2017089138
(71) Applicant: Toray Industries, Inc., Tokyo 103-8666 (JP)
(72) Inventor: ICHINOSE Keiko, Nagoya-shi Aichi 455-8502 (JP); ISAGO Yuka, Nagoya-shi Aichi 455-8502 (JP); YAMAMOTO Daisuke, Nagoya-shi Aichi 455-8502 (JP)
(74) Representative: Mewburn Ellis LLP
(86) International application number: PCT/JP2017/038535
(87) International publication number: WO 2018/079613

(57) **Abstract**

There is provided a thermoplastic resin composition comprising 100 parts by weight of at least one thermoplastic resin (A); and 0.1 to 50 parts by weight of a compound (B) intramolecularly including at least one functional group R (where a plurality of functional groups R optionally have structures identical with each other or structures different from each other) having a hydrogen bond donor and/or a hydrogen bond acceptor that are capable of intermolecularly forming at least two or more hydrogen bonds.

## Description

### Cross Reference to Related Applications

The present application claims priority from Japanese patent application 2016-212907 filed on October 31, 2016, Japanese patent application 2017-29801 filed on February 21, 2017, Japanese patent application 2017-32765 filed on February 24, 2017 and Japanese patent application 2017-89138 filed on April 28, 2017, the entireties of the contents of which are hereby incorporated by reference into this application.

### Field

The present disclosure relates to a thermoplastic resin composition including a compound having a functional group that intermolecularly forms at least two or more hydrogen bonds.

### Background

There has conventionally been a need for a material having high gas barrier properties as a packaging material of food and medical products. In recent years, there has been a need for a material having high gas barrier properties in a variety of fields other than the application of the packaging material, i.e., applications that utilize the high gas barrier properties in daily life and industrial activities, for example, applications in hydrogen economy. Especially the fast-developing application of a hydrogen tank for fuel cell requires a resin material that satisfies both the high hydrogen gas barrier property and the high mechanical properties. A conventionally known example of the resin material having the high hydrogen gas barrier property is an ethylene/ vinyl alcohol copolymer. The ethylene/ vinyl alcohol polymer has high gas barrier property and is accordingly used as the packaging material for food and medical products. Compared with other general resin materials such as polyethylene, polyester, and polyamide, on the other hand, the ethylene/ vinyl alcohol copolymer has the poorer mechanical properties including toughness and drawability, the poorer moldability and the poorer hot water resistance. For example, Patent Literature 1 has reported that a resin composition obtained by melt kneading an ethylene/ vinyl alcohol copolymer and a polyamide in a nitrogen gas stream improves the chemical resistance. In another example, Patent Literature 2 has reported that an application layer obtained by applying an ethylene/ vinyl alcohol copolymer on the surface of a molded product by thermal spraying technique is used as a gas barrier layer. In another example, Patent Literature 3 has reported a method of producing a multi-layered structure of an ethylene/ vinyl alcohol copolymer and a polyamide layer for application to a hydrogen tank that requires the high toughness.

One factor of providing the ethylene/ vinyl alcohol copolymer with the high gas barrier property is hydrogen bonding between polymer molecular chains formed by OH groups of vinyl alcohol structural units. There have been lots of researches to introduce a multiple hydrogen bonding structural component having a plurality of hydrogen bonds into a polymer, as a technique of improving the mechanical properties of the resin material using such hydrogen bonding. For example, Patent literature 4 has reported that a polymer obtained by copolymerizing a multiple hydrogen bonding-forming site with a main chain to have strong intermolecular interaction is effective as a cosmetic for trimness and gloss of the hair. Patent Literature 5 has reported that introducing multiple hydrogen bonds into a terminal of a polymer having a number average molecular weight of not greater than 20,000 to be intermolecularly strongly associated with one another improves the breaking elongation. Patent Literature 6 has reported that introducing multiple hydrogen bonds to a terminal of a polyester having a number average molecular weight of approximately 10,000 provides the high fluidity resulting from a low molecular weight component due to dissociation of the intermolecular hydrogen bonds at high temperature and provides the mechanical properties like a high molecular weight component due to intermolecular hydrogen bonds at ordinary temperature. Patent Literature 7 has reported that introducing a heterocyclic amine derivative as a hydrogen bonding donor component into a polymer forms hydrogen bonds between polymer molecules and enhances the elastic modulus.

### Citation List

### Patent Literature

Patent Literature 1: JP 2005-271460A
Patent Literature 2: JP 2002-96016A
Patent Literature 3: JP 2012-192744A
Patent Literature 4: JP 2007-161715A
Patent Literature 5: JP 2000-351824A
Patent Literature 6: JP 2004-250623A
Patent Literature 7: JP 2002-201265A

### Summary

### Technical Problem

The technique described in Patent Literature 1 aims to improve the hot water resistance by kneading the polyamide with the ethylene/ vinyl alcohol copolymer. This technique, however, uses the resin composition to be stacked with another material and does not provide the resin composition alone with mechanical properties applicable for a molded product such as a hydrogen tank. The technique described in Patent Literature 2 forms the gas barrier layer by applying the ethylene/ vinyl alcohol copolymer on the surface of the molded product. This technique, however, causes pinholes or cracks in the application of a molded product such as a hydrogen tank and accordingly has difficulty in this application. The method of stacking a plurality of materials including a gas barrier layer as described in Patent Literature 3 requires a complex molding procedure and causes a problem of separation between different materials caused by hydrogen gas penetrating into the resin by repetition of charge and discharge of high-pressure hydrogen in the application of the hydrogen tank for fuel cell.

The technique described in Patent Literature 4 copolymerizes multiple hydrogen bonds with a polyurethane - polyurea - polyester copolymer for the purpose of providing good appearance in application as a cosmetic to the human body. This technique is, however, not practical in the application requiring mechanical properties such as toughness and intensity and does not improve the gas barrier property of the material. The technique described in Patent Literature 5 is related to a relatively low molecular-weight polytetrahydrofuran used as the polymer having the number average molecular weight of not greater than 20,000, in order to increase the concentration of the multiple hydrogen bonds in the polymer and thereby provide the effect of improving the mechanical properties. This technique is, however, not applicable to general resin materials and does not allow for effective improvement of the gas barrier property. The technique described in Patent Literature 6 is similarly related to the polyester having the number average molecular weight of approximately 10,000. This technique, however, does not provide the material having the sufficiently high gas barrier property. The technique described in Patent Literature 7 aims to enhance the elastic modulus by employing the intermolecular interaction of hydrogen bonds between an amide group and a pyridine ring, which is different from multiple hydrogen bonds, in the polyamide. This technique, however, does not provide the sufficient effect of improving the gas barrier property.

An object of the present disclosure is thus to provide a thermoplastic resin composition having excellent gas barrier property as well as good mechanical properties and good moldability, which is hardly attainable by the conventional techniques.

### Solution to Problem

In order to solve the above problem, the present disclosure may be implemented by aspects described below.
1. According to one aspect, there is provided a thermoplastic resin composition comprising 100 parts by weight of at least one thermoplastic resin (A); and 0.1 to 50 parts by weight of a compound (B) intramolecularly including at least one functional group R (where a plurality of functional groups R optionally have structures identical with each other or structures different from each other) having a hydrogen bond donor and/or a hydrogen bond acceptor that are capable of intermolecularly forming at least two or more hydrogen bonds.
2. In the thermoplastic resin composition described in Aspect 1 above, the functional group R of the compound (B) may have a heterocyclic structure including at least two different atoms selected from carbon atom, nitrogen atom and oxygen atom.
3. In the thermoplastic resin composition described in either Aspect 1 or Aspect 2 above, the compound (B) may have a structure expressed by a general formula (i) given below:

   **[Chem. 1]** R₁-H ···(i).

   (where R₁ includes the functional group R).
4. In the thermoplastic resin composition described in any one of Aspects 1 to 3 above, the compound (B) may be one of compounds expressed by formulae given below: 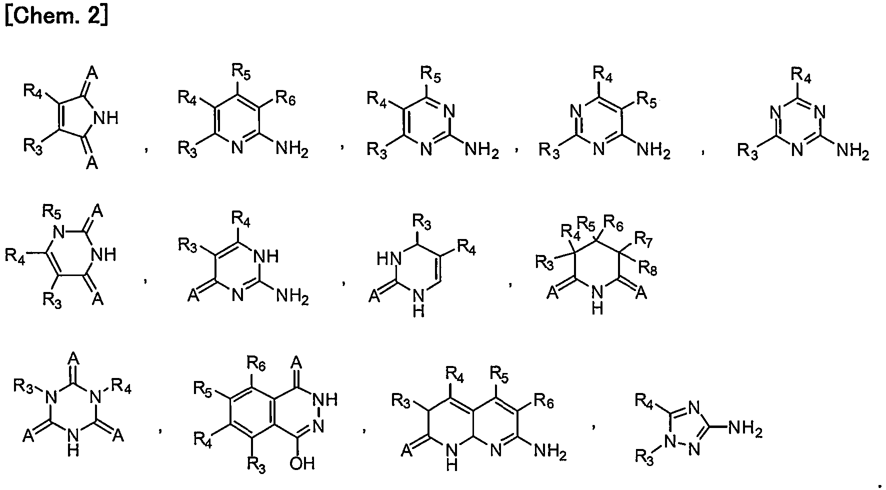 (where A denotes one selected from an oxygen atom, a sulfur atom and an NH group; and R₃, R₄, R₅, R₆, R₇ and R₈ are optionally identical with one another or different from one another and respectively denote one selected from a hydrogen atom, a linear alkyl group containing 1 to 20 carbon atoms, a branched alkyl group containing 3 to 20 carbon atoms, a cycloalkyl group containing 3 to 20 carbon atoms, Cl, Br, F, NH₂ and OH, wherein any of the linear alkyl group containing 1 to 20 carbon atoms, the branched alkyl group containing 3 to 20 carbon atoms, and the cycloalkyl group containing 3 to 20 carbon atoms optionally includes one or a plurality of at least one hetero atom selected from O, S, N, P, Cl, Br and F.)
5. In the thermoplastic resin composition described in either Aspect 1 or Aspect 2 above, the compound (B) may have a structure expressed by a general formula (ii) given below: 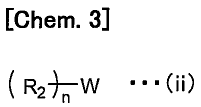 (where R₂ denotes a structure including the functional group R; n denotes an integral number of 1 to 20; and W denotes a structure including a hydrogen atom, a linear structure containing 1 to 10000 carbon atoms, or a branched or cyclic structure containing 3 to 10000 carbon atoms and optionally includes one or a plurality of at least one hetero atom selected from O, S, N, P, Cl, Br and F.)
6. In the thermoplastic resin composition described in any of Aspects 1, 2 and 5 above, the compound (B) may have a structure expressed by a general formula (iv) given below: 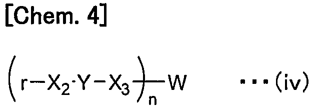 (where n denotes an integral number of 1 to 20: r has a heterocyclic structure including at least two different atoms selected from carbon atom, nitrogen atom and oxygen atom; r-X₂ includes the functional group; and W denotes a structure including a hydrogen atom, a linear structure containing 1 to 10000 carbon atoms, or a branched or cyclic structure containing 3 to 10000 carbon atoms and optionally includes one or a plurality of at least one hetero atom selected from O, S, N, P, Cl, Br and F, wherein X₂ and X₃ denote binding groups selected from groups given below and are optionally identical with each other or different from each other): 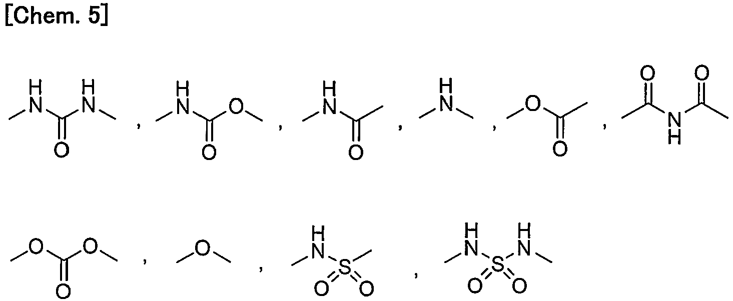 where Y denotes one of structures given below: 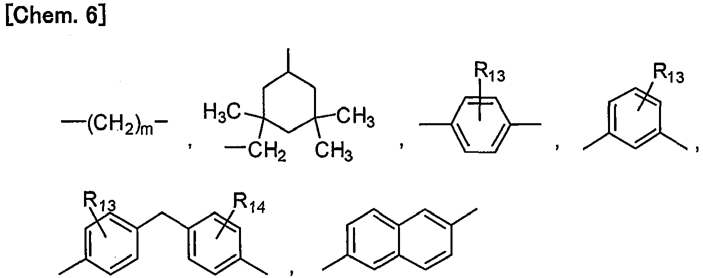 (where R₁₃ and R₁₄ respectively denote one selected from a hydrogen atom, a linear alkyl group containing 1 to 20 carbon atoms, a branched alkyl group containing 3 to 20 carbon atoms, and a cycloalkyl group containing 3 to 20 carbon atoms, and m denotes an integral number of 1 to 50.)
7. In the thermoplastic resin composition described in either Aspect 5 or Aspect 6 above, the compound (B) may include two or more functional groups that have identical structures.
8. In the thermoplastic resin composition described in any one of Aspects 5 to 7 above, the compound (B) may have one of structures expressed by formulae given below: 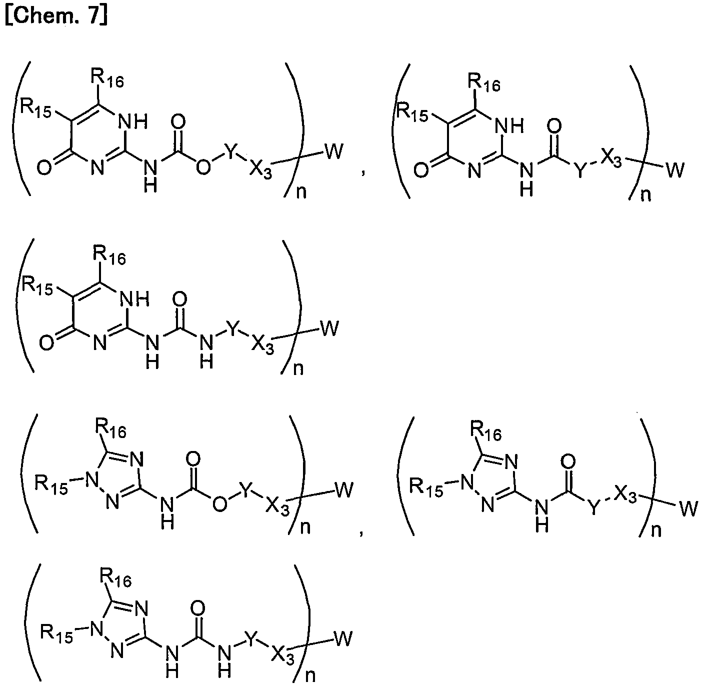 (where R₁₅ and R₁₆ respectively denote one selected from a hydrogen atom, a linear alkyl group containing 1 to 20 carbon atoms, a branched alkyl group containing 3 to 20 carbon atoms, and a cycloalkyl group containing 3 to 20 carbon atoms and optionally includes one or a plurality of at least one hetero atom selected from O, S, N, P, Cl, Br and F, and X₃ denotes a binding group selected from binding groups given below: 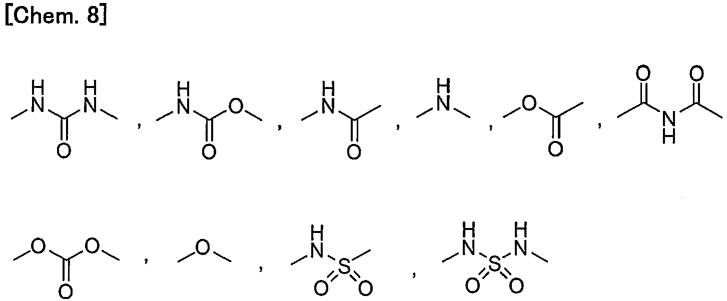 where Y denotes one of structures given below: 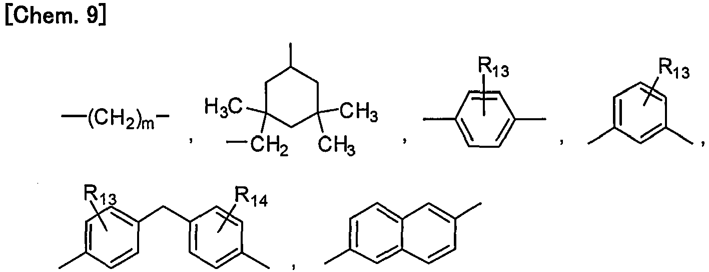
   (where R₁₃ and R₁₄ respectively denote one selected from a hydrogen atom, a linear alkyl group containing 1 to 20 carbon atoms, a branched alkyl group containing 3 to 20 carbon atoms, and a cycloalkyl group containing 3 to 20 carbon atoms, and m denotes an integral number of 1 to 50,)
   where W denotes a structure including a hydrogen atom, a linear structure containing 1 to 10000 carbon atoms, or a branched or cyclic structure containing 3 to 10000 carbon atoms and optionally includes one or a plurality of at least one hetero atom selected from O, S, N, P, Cl, Br and F.
9. In the thermoplastic resin composition described in any one of Aspects 5 to 8 above, the structure W may include a branched structure containing 3 to 1000 carbon atoms.
10. In the thermoplastic resin composition described in any one of Aspects 5 to 9 above, the structure W may include a branched structure that contains 3 to 1000 carbon atoms and that is derived from a polyhydric alcohol.
11. The thermoplastic resin composition described in any one of Aspects 1 to 10 above may further comprise 0.1 to 50 parts by weight of a polyhydric alcohol (C) containing 3 to 1000 carbon atoms.
12. In the thermoplastic resin composition described in any one of Aspects 1 to 11 above, the thermoplastic resin (A) may be at least one selected from polyamide, polyester, polyether imide, polyether ether ketone, liquid crystal polymer, polyamide-imide, polyimide, polyethylene, polystyrene, polypropylene, polyacetal, polycarbonate, polyarylate, polyphenylene sulfide, polyether sulfone, polysulfone, polyvinyl alcohol, and polyethylene/ vinyl alcohol copolymer.
13. According to another aspect, there is provided a production method of the thermoplastic resin composition described in any one of Aspects 1 to 10 above. The production method comprises mixing 100 parts by weight of the at least one thermoplastic resin (A) with 0.1 to 50 parts by weight of the compound (B) in a heat melting condition.
14. According to another aspect, there is provided a production method of the thermoplastic resin composition described in Aspect 11 above. The production method comprises mixing 100 parts by weight of the at least one thermoplastic resin (A) with 0.1 to 50 parts by weight of the compound (B) and 0.1 to 50 parts by weight of the polyhydric alcohol (C) in a heat melting condition.
15. According to another aspect, there is provided a molded product of the thermoplastic resin composition described in any of Aspects 1 to 12 above.

### Advantageous Effects

The present disclosure mixes the thermoplastic resin with the compound having the structure that intermolecularly forms at least two or more hydrogen bonds and thereby provides the high gas barrier property without damaging the mechanical characteristics and the moldability of the thermoplastic resin.

### Description of Embodiments

The following describes an embodiment of the present disclosure in detail.

### (1) Thermoplastic Resin (A)

The thermoplastic resin (A) used according to the embodiment is not specifically limited in such a range that does not damage the advantageous effects of the present disclosure and may be, for example, polyamide, polyester, polyether imide, polyether ketone, polyether ether ketone, liquid crystal polymer, polyamide-imide, polyimide, polyacetal, polycarbonate, polyarylate, polyphenylene sulfide, polyether sulfone, polysulfone, polyvinyl alcohol, polyethylene/ vinyl alcohol copolymer, polyurethane, norbornene resin or fluororesin.

A thermoplastic resin composition according to the embodiment has high gas barrier property that may be effectively provided by hydrogen bonding and interaction between the thermoplastic resin (A) and a compound (B) to decrease the free volume in the thermoplastic resin composition. Accordingly, a thermoplastic resin that is capable of forming hydrogen bonding with the compound (B) is preferably used as the thermoplastic resin (A). More specifically, a preferably used thermoplastic resin is one thermoplastic resin or or two or more different thermoplastic resins selected from polyamides, polyesters, polyether imides, polyether ketones, polyether ether ketones, liquid crystal polymers, polyamide-imides, polyimides, polyethylenes, polystyrenes, polypropylenes, polyacetals, polycarbonates, polyarylates, polyphenylene sulfides, polyether sulfones, polysulfones, polyvinyl alcohols and polyethylene/ vinyl alcohol copolymers. From the viewpoint of providing the resulting thermoplastic resin composition with the excellent mechanical properties, especially preferable is one thermoplastic resin or two or more different thermoplastic resins selected from polyamides, polyesters, polyether imides, polyether ether ketones, liquid crystal polymers, polyamide-imides and polyimides.

Concrete examples of the polyamide used as the thermoplastic resin (A) include polycaproamide (nylon 6), polycaproamide/ polyether copolymer, polyhexamethylene adipamide (nylon 66), polyhexamethylene adipamide/ polyether copolymer, polytetramethylene adipamide (nylon 46), polytetramethylene adipamide/ polyether copolymer, polyhexamethylene sebacamide (nylon 610), polyhexamethylene sebacamide/ polyether copolymer, polyhexamethylene dodecamide (nylon 612), polyhexamethylene dodecamide/ polyether copolymer, polyhexamethylene adipamide/ polyhexamethylene terephthalamide copolymer (nylon 66/ 6T), polyhexamethylene adipamide/ polyhexamethylene isophthalamide copolymer (nylon 66/ 61), polyhexamethylene adipamide/ polyhexamethylene terephthalamide/ polyhexamethylene isophthalamide copolymer (nylon 66/ 6T/ 61), polyxylylene adipamide (nylon XD6), polyxylylene adipamide/ polyether copolymer, polylauryl lactam (nylon 12), polylauryl lactam/ polyether copolymer, and mixtures and copolymers thereof.

Concrete examples of the polyester used as the thermoplastic resin (A) include polyethylene terephthalate, polypropylene terephthalate, polybutylene terephthalate, polyethylene naphthalate, polybutylene naphthalate, polycyclohexane dimethylene terephthalate, polyethylene-1,2-bis(phenoxy)ethane-4,4'-dicarboxylate, polyethylene-1,2-bis(phenoxy)ethane-4,4'-dicarboxylate, polyethylene isophthalate/ terephthalate, polybutylene terephthalate/ isophthalate, polybutylene terephthalate/ decane dicarboxylate, polycyclohexane dimethylene terephthalate/ isophthalate, polyethylene malonate, polyethylene propionate, polybutylene malonate, polybutylene propionate, polyethylene adipate, polybutylene adipate, polyglycoside, polyactide, and mixtures and copolymers thereof.

The melt viscosity of the thermoplastic resin (A) used according to the embodiment is not specifically limited but is preferably not lower than 1 Pa·s and is more preferably not lower than 5 Pa·s in terms of developing the intrinsic properties of the resin and providing the good moldability. The melt viscosity of the thermoplastic resin (A) is preferably not higher than 1000 Pa·s and more preferably not higher than 500 Pa·s from the standpoint described above. The melt viscosity of the thermoplastic resin (A) according to the embodiment denotes a value measured by a Koka flow tester under the conditions of a melting point (Tm) +10°C and a shear rate of 1,000 (1/second). The melting point (Tm) denotes an endothermic peak temperature (Tm2) observed in differential calorimetry that measures a thermoplastic resin at a temperature rise rate of 20°C/ minute from room temperature to observe an endothermic peak temperature (Tm1), keeps the thermoplastic resin at a temperature of Tm1+20°C for 5 minutes after the observation of Tm1, subsequently cools down the thermoplastic resin to room temperature at a temperature fall rate of 20°C/ minute, and then measures the thermoplastic resin again at the temperature rise rate of 20°C/ minute.

### (2) Compound (B)

The compound (B) according to the embodiment is a compound intramolecularly including at least one functional group R having a hydrogen bond donor and/or a hydrogen bond acceptor that are capable of intermolecularly forming at least two or more hydrogen bonds. When the compound (B) has a plurality of functional groups R, the plurality of functional groups R may have identical structures or may have different structures. When the compound (B) has a plurality of functional groups R, it is preferable that the plurality of functional groups R have identical structures. The compound (B) is a compound having the functional group R that intermolecularly forms at least two or more hydrogen bonds. The compound (B) has the functional group R that is also capable of forming one or more hydrogen bonds with the thermoplastic resin (A).

The hydrogen bond herein means electrostatic interaction between a hydrogen atom positively charged by polarization and a negative charge of an unshared electron pair. The hydrogen bond donor means a proton donor, and its concrete examples include O-H, N-H and F-H. The hydrogen bond acceptor means a proton acceptor, and its concrete examples include O, N, S, F, Cl and Br.

The compound (B) according to the embodiment intermolecularly forms hydrogen bonding and also forms hydrogen bonding with the thermoplastic resin (A) as described above. Accordingly, the thermoplastic resin composition according to the embodiment includes an intermolecular reactant of the compound (B) and a reactant of the thermoplastic resin (A) and the compound (B). There are, however, circumstances under which identifying the structures of these reactants is unpractical. The present application accordingly identifies the thermoplastic resin composition of the present application by the components mixed therein.

The compound (B) of the embodiment may be a compound having a structure described in either (a) or (b) below:
(a) a compound that is expressed by general formula (i) given below and that has a structure R₁ including the functional group R described above:

   **[Chem. 10]** R₁-H ···(i).
(b) a compound that is expressed by a general formula (ii) given below and that intramolecularly has at least one structure R₂ including the functional group R described above.

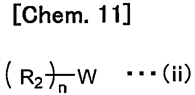

In the general formula (ii) given above, n denotes a positive integral number of 1 to 20. The number n of not less than 2 in the formula indicates the presence of multiple structures R₂. In this case, the structures R₂ may be identical structures or may be different structures.

In the compound (B) of the embodiment, it is preferable that the functional group R having the hydrogen bond donor and/or the hydrogen bond acceptor that are capable of forming at least two or more hydrogen bonds has a heterocyclic structure including at least two different atoms selected from carbon atom, nitrogen atom and oxygen atom. It is also preferable that the hydrogen bond acceptor of the compound (B) is oxygen atom and/or nitrogen atom.

When the compound (B) is expressed by the general formula (i) in (a) described above, it is preferable that the structure R1 including the functional group R is a heterocyclic structure including at least two different atoms selected from carbon atom, nitrogen atom and oxygen atom.

Following compounds (including all tautomers) are given as concrete examples of the especially preferable structure of the compound (B) expressed by the general formula (i):

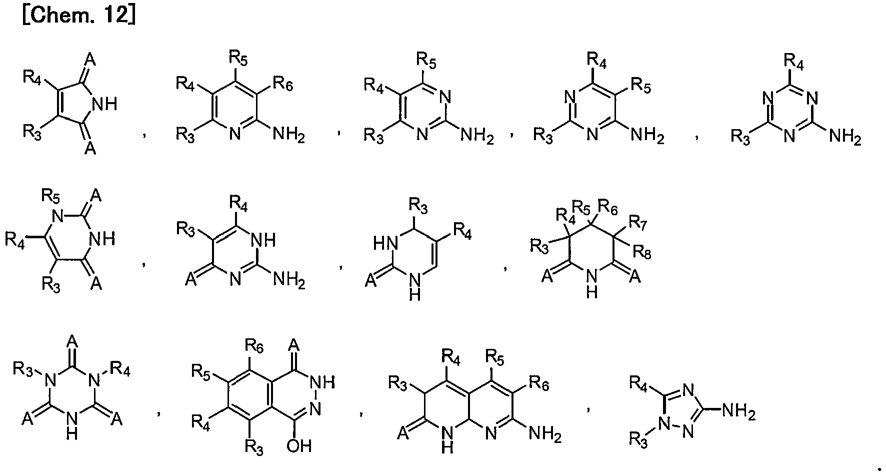

In the compound (B) given above, A denotes one selected from an oxygen atom, a sulfur atom and an NH group. A is preferably an oxygen atom. In the compound (B) given above, R₃, R₄, R₅, R₆, R₇ and R₈ may be identical with one another or may be different from one another and respectively denote one selected from a hydrogen atom, a linear alkyl group containing 1 to 20 carbon atoms, a branched alkyl group containing 3 to 20 carbon atoms, a cycloalkyl group containing 3 to 20 carbon atoms, Cl, Br, F, NH₂ and OH. Any of the linear alkyl group containing 1 to 20 carbon atoms, the branched alkyl group containing 3 to 20 carbon atoms, and the cycloalkyl group containing 3 to 20 carbon atoms may include one or a plurality of at least one hetero atom selected from O, S, N, P, Cl, Br and F.

Among them, structures given below are preferable as the structure of the compound (B) expressed by the general formula (i):

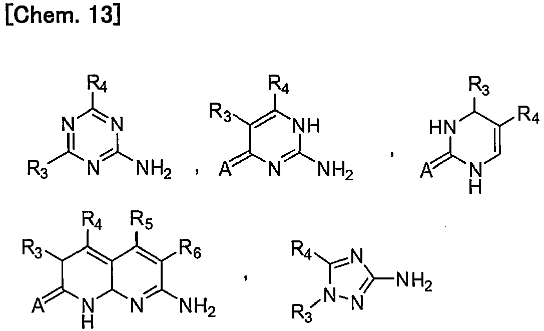

Among them, the following structures are especially preferable.

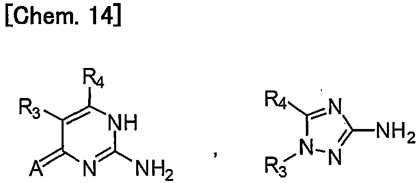

When the compound (B) is expressed by the general formula (ii) of the above compound (b), it is preferable that the structure R₂ including the functional group R is a heterocyclic structure including at least two different atoms selected from carbon atom, nitrogen atom and oxygen atom.

In the compound (B) of the above general formula (ii), the structure of W is not specifically limited but is preferably a structure including a hydrogen atom, a linear structure containing 1 to 10000 carbon atoms, or a branched or cyclic structure containing 3 to 10000 carbon atoms. Any of these structures may include one or a plurality of at least one hetero atom selected from O, S, N, P, Cl, Br and F. W may further include at least one substituent, for example, a carbonyl group or an amide group derived from aldehydes, ketones and carboxylic acids. From the standpoint that increasing the concentration of the functional group R included in the compound (B) more readily provides the effect of improving the hydrogen bond-based gas barrier property, W preferably has a structure including a linear structure containing 1 to 1000 carbon atoms, a branched or cyclic structure containing 3 to 1000 carbon atoms, or two or more repeating structures containing 2 to 1000 carbon atoms. A structure including a branched structure containing 3 to 1000 carbon atoms is especially preferable since this is more likely to provide the effect of improving the gas barrier property of the present disclosure. Concrete examples of the structure including the linear structure containing 1 to 1000 carbon atoms or the branched or cyclic structure containing 3 to 1000 carbon atoms include 2,2-dimethyl-1,3-propanediol, 2-hydroxxymethyl-2-methyl-1,3-propanediol, ethylene glycol, polyethylene glycol, glycerol, diglycerol, pentaglycerol, tetramethylolethane, neopentyl glycol, tetramethylolpropane, tris(hydroxymethyl)acetic acid, structures derived from polymers (for example, polyethylene glycol, polypropylene glycol, and polytetramethylene glycol) and copolymers (for example, polyacrylates and polymethacrylates having alkyl hydrocarbon side chain or polyethylene glycol side chain, copolymers including polyethylene, polyethylene glycol, polypropylene, polypropylene glycol or polytetramethylene glycol), and structures derived from monoethanolamine, monopropanolamine and 2-amino-1,3-propanediol. Among them, a structure having a branched structure derived from a polyhydric alcohol containing 3 to 1000 carbon atoms is preferable. More specifically, the structure having the branched structure derived from a divalent to 20-valent polyhydric alcohol is preferable and the structure having the branched structure derived from a divalent to octavalent polyhydric alcohol is more preferable. Concrete examples include structures derived from sugar alcohols such as trimethylolpropane, pentaerythritol, dipentaerythritol, tripentaerythritol, glycerol, erythritol, D-mannitol, D-sorbitol, D- and L-arabitol, xylitol, iditol, talitol, allitol, altritol and guilitol and structures derived from sugars such as cyclodextrin, D-mannose, glucose, galactose, sucrose, fructose, xylose, arabinose, threitol and D-gulono-γ-lactone. Especially preferable are structures derived from pentaerythritol, dipentaerythritol, tripentaerythritol, D-mannose, glucose, galactose, sucrose, fructose, xylose, arabinose, D-mannitol, D-sorbitol, and D- and L-arabitol.

In the compound (B) of the above general formula (ii), the structure R₂ is introduced into W by covalent bonding. It is preferable that the structure R₂ is introduced into W via a linking group included in the structure R₂. When the structure R₂ is a structure introduced into W via a linking group included in the structure R₂, the compound (B) according to this embodiment may be expressed by a general formula (iii) given below. In the general formula (iii), (r-Xi) includes the functional group R described above.

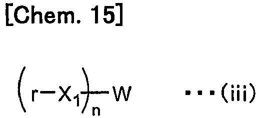

In the general formula (ii) given above, when the structure R₂ is a structure introduced into W via a linking group included in the structure R₂, the compound (B) according to this embodiment may be expressed by a general formula (iv) given below. In the general formula (iv), (r-X₂) includes the functional group R described above and includes a hydrogen bond donor and/or a hydrogen bond acceptor that are capable of intermolecularly forming at least two or more hydrogen bonds.

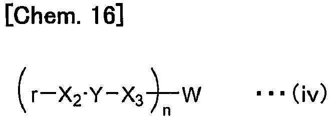

In the general formulae (iii) and (iv) given above, n denotes a positive integral value of 1 to 20.

A structure r in the general formulae (iii) and (iv) is preferable a heterocyclic structure including at least two different atoms selected from carbon atom, nitrogen atom and oxygen atom. Following compounds (including all tautomers) are given as concrete examples of the especially preferable structure of the structure r in the general formulae (iii) and (iv):

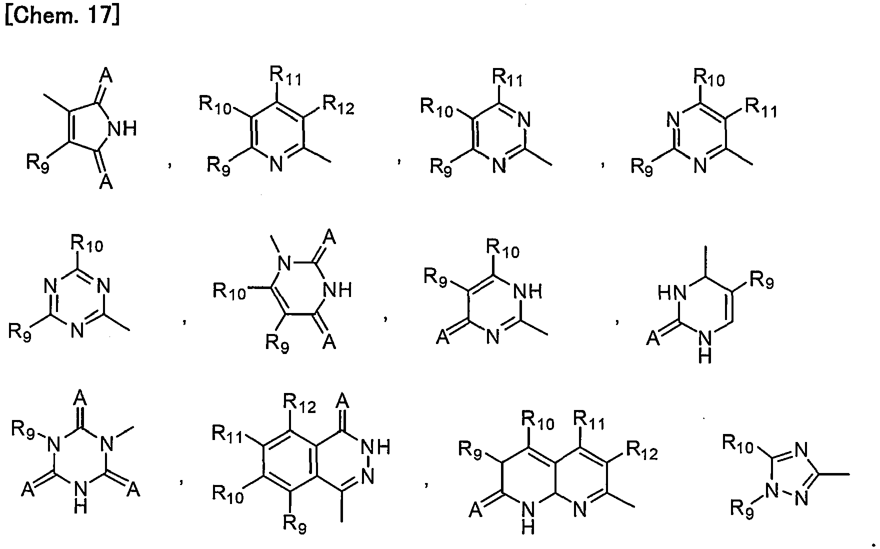

A in the above structure denotes one selected from an oxygen atom, a sulfur atom and an NH group. A is preferably an oxygen atom. In the above structure, R₉, R₁₀, R₁₁, and R₁₂ may be identical with one another or may be different from one another and respectively denote one selected from a hydrogen atom, a linear alkyl group containing 1 to 20 carbon atoms, a branched alkyl group containing 3 to 20 carbon atoms, and a cycloalkyl group containing 3 to 20 carbon atoms. Any of the linear alkyl group containing 1 to 20 carbon atoms, the branched alkyl group containing 3 to 20 carbon atoms, and the cycloalkyl group containing 3 to 20 carbon atoms may include one or a plurality of at least one hetero atom selected from O, S, N, P, Cl, Br and F.

Among them, structures given below are preferable as the structure r in the general formulae (iii) and (iv):

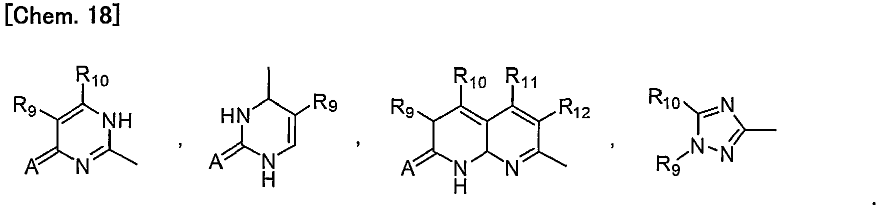

Among them, structures are given below are especially preferable:

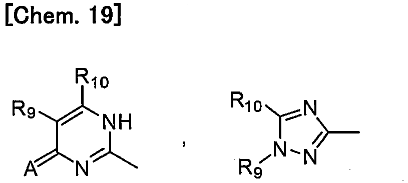

X₁, X₂ and X₃ in the above general formulae (iii) and (iv) respectively denote a linking group, and following structures are given as concrete examples of the structure of each of X₁, X₂ and X₃:

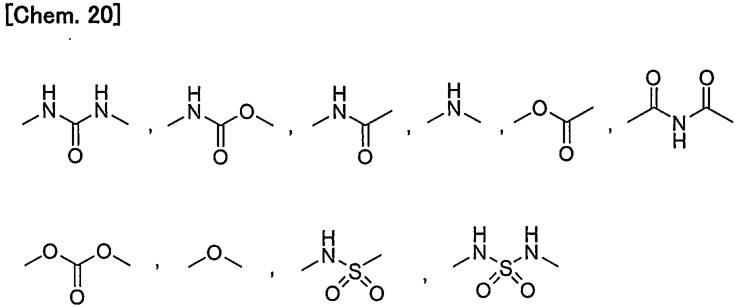

Among them, any of structures given below is preferable.

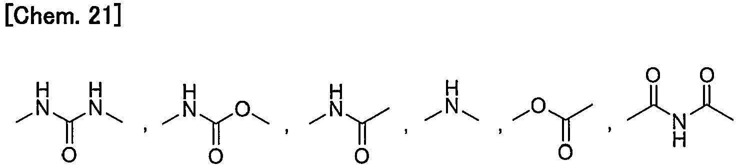

Among them, any of structures given below is especially preferable.

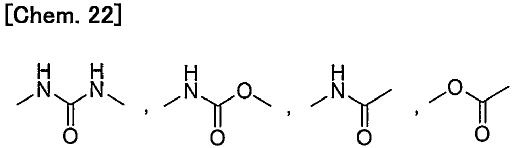

In the above general formula (iv), Y may have any of structures given below:

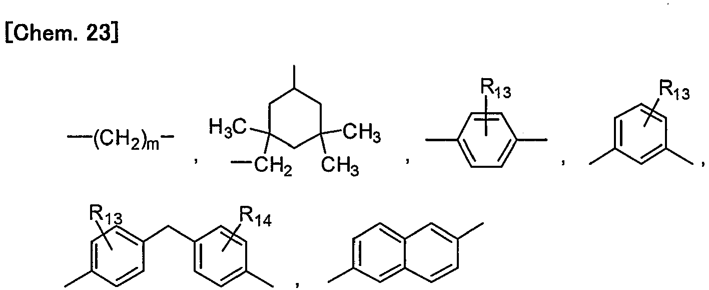

R₁₃ and R₁₄ in the above structures may be identical with each other or may be different from each other and respectively denote one selected from a hydrogen atom, a linear alkyl group containing 1 to 20 carbon atoms, a branched alkyl group containing 3 to 20 carbon atoms, and a cycloalkyl group containing 3 to 20 carbon atoms. In the above structure, m denotes an integral number of 1 to 50.

The compound (B) of the embodiment expressed by the general formula (ii), (iii) or (iv) preferably has any of structures given below to obtain the specially high effect of improving the gas barrier property.

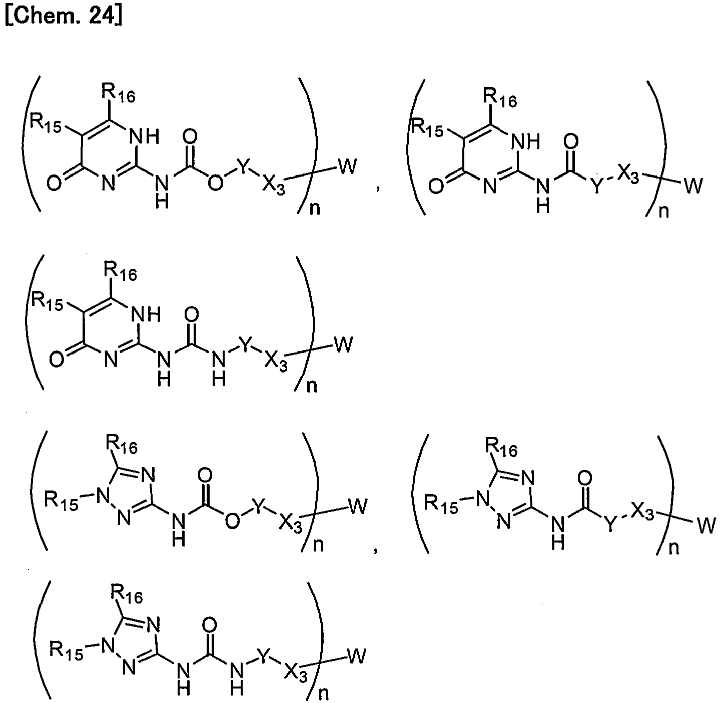

In the above formulae, R₁₅ and R₁₆ respectively denote one selected from a hydrogen atom, a linear alkyl group containing 1 to 20 carbon atoms, a branched alkyl group containing 3 to 20 carbon atoms, and a cycloalkyl group containing 3 to 20 carbon atoms. Any of the linear alkyl group containing 1 to 20 carbon atoms, the branched alkyl group containing 3 to 20 carbon atoms, and the cycloalkyl group containing 3 to 20 carbon atoms may include one or a plurality of at least one hetero atom selected from O, S, N, P, Cl, Br and F. In the above formulae, X₃ and Y preferably have the same structures as those described above with regard to the general formula (iv).

It is especially preferable that the compound (B) of the embodiment has any of structures given below to provide the high effect of improving the gas barrier property, the high crystallization rate and the good moldability.

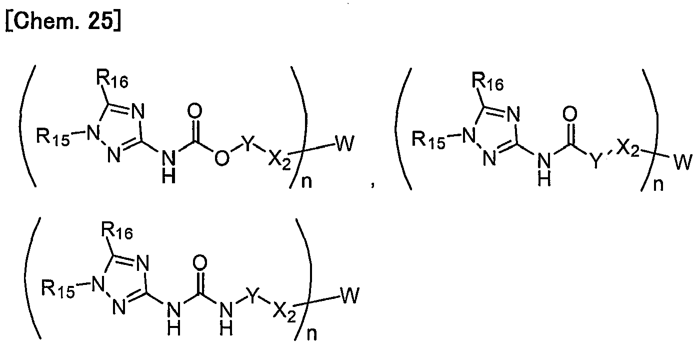

Like the structure described above with regard to the general formula (ii), W in the above general formulae (iii) and (iv) is not specifically limited but is preferably a structure including a hydrogen atom, a linear structure containing 1 to 10000 carbon atoms, or a branched or cyclic structure containing 3 to 10000 carbon atoms. Any of these structures may include one or a plurality of at least one hetero atom selected from O, S, N, P, Cl, Br and F. W may further include at least one substituent, for example, a carbonyl group or an amide group derived from aldehydes, ketones and carboxylic acids. From the standpoint that increasing the concentration of the functional group R included in the compound (B) more readily provides the effect of improving the hydrogen bond-based gas barrier property, W preferably has a structure including a linear structure containing 1 to 1000 carbon atoms, a branched or cyclic structure containing 3 to 1000 carbon atoms, or two or more repeating structures containing 2 to 1000 carbon atoms. A structure including a branched structure containing 3 to 1000 carbon atoms is especially preferable since this is more likely to provide the effect of improving the gas barrier property of the present disclosure. Concrete examples of the structure including the linear structure containing 1 to 1000 carbon atoms or the branched or cyclic structure containing 3 to 1000 carbon atoms include 2,2-dimethyl-1,3-propanediol, 2-hydroxxymethyl-2-methyl-1,3-propanediol, ethylene glycol, polyethylene glycol, glycerol, diglycerol, pentaglycerol, tetramethylolethane, neopentyl glycol, tetramethylolpropane, tris(hydroxymethyl)acetic acid, structures derived from polymers (for example, polyethylene glycol, polypropylene glycol, and polytetramethylene glycol) and copolymers (for example, polyacrylates and polymethacrylates having alkyl hydrocarbon side chain or polyethylene glycol side chain, copolymers including polyethylene, polyethylene glycol, polypropylene, polypropylene glycol or polytetramethylene glycol), and structures derived from monoethanolamine, monopropanolamine and 2-amino-1,3-propanediol. Among them, a structure having a branched structure derived from a polyhydric alcohol containing 3 to 1000 carbon atoms is preferable. More specifically, the structure having the branched structure derived from a divalent to 20-valent polyhydric alcohol is preferable and the structure having the branched structure derived from a divalent to octavalent polyhydric alcohol is more preferable. Concrete examples include structures derived from sugar alcohols such as trimethylolpropane, pentaerythritol, dipentaerythritol, tripentaerythritol, glycerol, erythritol, D-mannitol, D-sorbitol, D- and L-arabitol, xylitol, iditol, talitol, allitol, altritol and guilitol and structures derived from sugars such as cyclodextrin, D-mannose, glucose, galactose, sucrose, fructose, xylose, arabinose, threitol and D-gulono-γ-lactone. Especially preferable are structures derived from pentaerythritol, dipentaerythritol, tripentaerythritol, D-mannose, glucose, galactose, sucrose, fructose, xylose, arabinose, D-mannitol, D-sorbitol, and D- and L-arabitol.

A production method of the compound (B) expressed by the above general formula (iv) is not specifically limited but may be produced, for example, by a method having processes (I) and (II) shown below:
(I) a process of producing a precursor a having a reactive end group by a reaction of a compound that is illustrated by any of structural formulae given below and that has a primary amine or a secondary amine as a reactive group with a bifunctional compound expressed by a general formula (v) given below (hereinafter also referred to as bifunctional compound (v)) in the presence of a solvent or in the absence of a solvent. 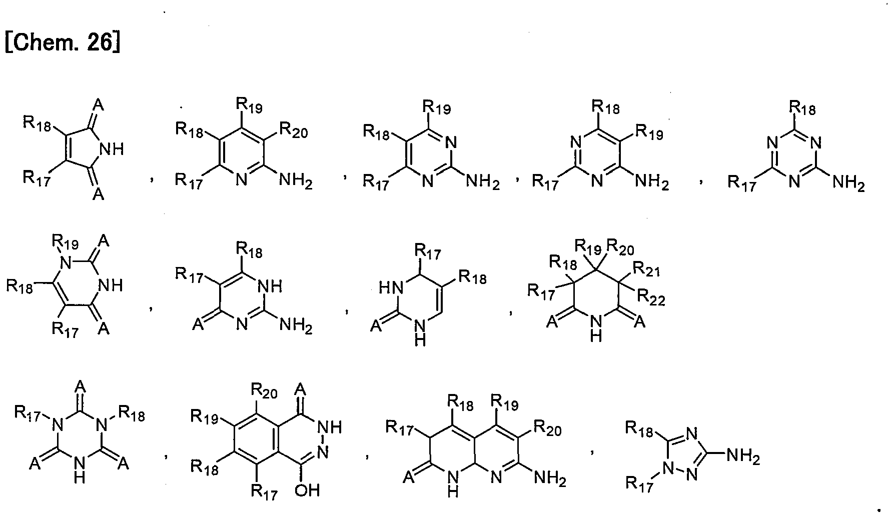 (A denotes A denotes one selected from an oxygen atom, a sulfur atom and an NH group. A is preferably an oxygen atom. In the structures given above, R₁₇, R₁₈, R₁₉, R₂₀, R₂₁ and R₂₂ may be identical with one another or may be different from one another and respectively denote one selected from a hydrogen atom, a linear alkyl group containing 1 to 20 carbon atoms, a branched alkyl group containing 3 to 20 carbon atoms and a cycloalkyl group containing 3 to 20 carbon atoms. Any of the linear alkyl group containing 1 to 20 carbon atoms, the branched alkyl group containing 3 to 20 carbon atoms, and the cycloalkyl group containing 3 to 20 carbon atoms may include one or a plurality of at least one hetero atom selected from O, S, N, P, Cl, Br and F.)

   **[Chem. 27]** Z₁-Y-Z₂ ···(v).

   (Z₁ and Z₂ may be respectively an isocyanate group or a carboxyl group. Y may have any of structures illustrated below: 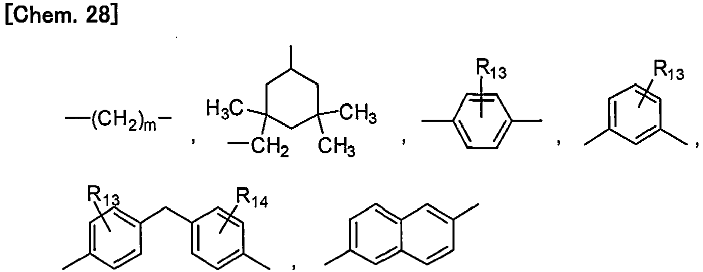 (R₁₃ and R₁₄ may be identical with each other or may be different from each other and respectively denote one selected from a hydrogen atom, a linear alkyl group containing 1 to 20 carbon atoms, a branched alkyl group containing 3 to 20 carbon atoms, and a cycloalkyl group containing 3 to 20 carbon atoms.)
(II) A process of causing a compound that includes a functional group having reactivity with the reactive end group of the precursor a produced in the above process (I) (hereinafter also referred to as "reactive functional group") and that has a linear, branched or cyclic structure containing 1 to 10000 carbon atoms or two or more repeating structures containing 1 to 10000 carbon atoms (hereinafter also referred to as "compound having a reactive functional group") to react with the precursor a in the presence of a solvent or in the absence of a solvent

Reactive functional groups Z₁ and Z₂ of the bifunctional compound (v) preferably used in the above process (I) respectively denote, for example, an isocyanate group or a carboxyl group and may be identical with each other or may be different from each other. From the standpoint that a diisocyanate especially has high reactivity, it is preferable that both Z₁ and Z₂ are isocyanate groups. Concrete examples of the bifunctional compound (v) include hexamethylene diisocyanate, isophorone diisocyanate, diphenylmethane diisocyanate, phenyl diisocyanate, toluene diisocyanate and naphthalene diisocyanate. Especially preferable are hexamethylene diisocyanate, isophorone diisocyanate, phenyl diisocyanate and diphenylmethane diisocyanate.

The reaction in the process (I) may proceed even in the absence of a catalyst. Using a catalyst, however, shortens a reaction time. The catalyst may be, for example, a metal such as tin, zinc, lead, titanium, bismuth, zirconium, germanium, antimony, or aluminum or a derivative of any of these metals. The derivative is preferably a metal alkoxide, a carboxylate, a carbonate, an oxide, or a halide. Concrete examples include tin chloride, tin octylate, zinc chloride, zinc acetate, lead oxide, lead carbonate, titanium chloride, alkoxy titanium, germanium oxide and zirconium oxide. Among them, titanium compounds are preferable, and especially preferable is alkoxy titanium.

When a solvent is used for the reaction of the process (I), there is no limitation as long as the solvent is a solvent that dissolves the bifunctional compound (v) and that does not substantially react with the bifunctional compound (v). Concrete examples include dimethyl sulfoxide, dimethyl formamide, dimethyl acetoamide, tetrahydrofuran and chloroform. The reaction temperature depends on the boiling point of the solvent used. In general, in order to obtain a target substance with a high yield, the reaction temperature is preferably in a range of room temperature to 200°C and is more preferably in a range of room temperature to 150°C.

The reaction time depends on the reaction temperature. The reaction time is generally 0.1 hours to 48 hours and is preferably 1 hour to 24 hours.

This production method in the absence of a solvent not only provides the precursor a that is the target substance in the process (I) with a high yield and a high purity, but shortens the reaction time and simplifies a washing process. The reaction time is preferably in a range of room temperature to 150°C.

Irrespective of the presence of a solvent or the absence of a solvent, this reaction using the catalyst described above shortens a polymerization time. The amount of the catalyst added is not specifically limited but is preferably 0.001 to 2 mol% and is more preferably 0.01 to 0.5 mol% relative to the total molar number of the compound having a primary amine or a secondary amine as the reactive group and the bifunctional compound (v).

Irrespective of the presence of a solvent or the absence of a solvent, this reaction generally proceeds in a heterogeneous system. The precursor a that is the target substance of the process (I) may be obtained with a high purity by washing out an excess of the bifunctional compound (v) with a solvent after filtration of the precipitating target substance. The solvent used for washing is not specifically limited. There is no specific limitation as long as the solvent dissolves the bifunctional compound (v) and does not substantially react with the precursor a that is the target substance. Concrete examples include hydrocarbon solvents such as hexane, cyclohexane, benzene and toluene; ketone solvents such as acetone; and ether solvents such as diethyl ether and methyl-tert-butyl ether.

The compound that has the reactive functional group and that is used in the above process (II) is a compound that includes a functional group having the reactivity with the reactive end group of the precursor a produced in the process (I) and that has a linear structure containing 1 to 10000 carbon atoms or a branched or cyclic structure containing 3 to 10000 carbon atoms. This compound may include one or a plurality of at least one hetero atom selected from O, S, N, P, Cl, Br and F. Preferable examples of the compound having the reactive functional group include polyhydric alcohols, polyamines and amino alcohols.

The preferable polyhydric alcohol is not specifically limited but may be any polyhydric alcohol intramolecularly containing at least two hydroxyl groups. The preferable polyhydric alcohol may include at least one hetero atom selected from N, S and O and may further include at least one additional substituent, for example, a carbonyl group or an amide group derived from aldehydes, ketones and carboxylic acids. Concrete examples include 2,2-dimethyl-1,3-propanediol, trimethylolpropane, 2-hydroxxymethyl-2-methyl-1,3-propanediol, ethylene glycol, polyethylene glycol, glycerol, diglycerol, pentaglycerol, tetramethylolethane, neopentyl glycol, tetramethylolpropane, tris(hydroxymethyl)acetic acid, polymers (for example, polyethylene, polyethylene glycol, polypropylene, polypropylene glycol, and polytetramethylene glycol) and copolymers (for example, polyacrylates and polymethacrylates having alkyl hydrocarbon side chain or polyethylene glycol side chain, copolymers including polyethylene, polyethylene glycol, polypropylene, polypropylene glycol or polytetramethylene glycol), pentaerythritol, dipentaerythritol, tripentaerythritol, erythritol, D-mannitol, D-sorbitol, D- and L-arabitol, xylitol, iditol, talitol, allitol, altritol, guilitol, cyclodextrin, D-mannose, glucose, galactose, sucrose, fructose, xylose, arabinose, threitol and D-gulono-γ-lactone. When the polymer or the copolymer selected also corresponds to a thermoplastic resin, the compound (B) obtained in the process (II) is expected to be included in the thermoplastic resin (A). According to the embodiment, however, any compound including the functional group R having the hydrogen bond donor and/or the hydrogen bond acceptor that are capable of forming at least two or more hydrogen bonds is to be included in the compound (B).

The preferable polyamine is not specifically limited but may be any polyamine intramolecularly containing at least two or more amino groups. The preferable polyamine may include at least one hetero atom selected from N, S and O and may further include at least one additional substituent, for example, a carbonyl group or an amide group derived from aldehydes, ketones and carboxylic acids. Concrete examples include diamines such as ethylene diamine, propylene diamine, butylene diamine and hexamethylene diamine; triamines such as diethylene triamine, and tetramines such as triethylene tetramine.

The preferable amino alcohol is not specifically limited but may be any known compound including at least one hydroxyl group and at least one amino group. Concrete examples include monoethanolamine, monopropanolamine, and 2-amino-1,3-propanediol.

The reaction in the process (II) may proceed even in the absence of a catalyst. Using a catalyst, however, shortens a reaction time. The catalyst may be, for example, a metal such as tin, zinc, lead, titanium, bismuth, zirconium, germanium, antimony, or aluminum, a derivative of any of these metals or a tertiary amine catalyst. The derivative is preferably a metal alkoxide, a carboxylate, a carbonate, an oxide, or a halide. Concrete examples include tin chloride, tin octylate, dibutyltin laurate, stannous octoate, stannous oleate, zinc chloride, zinc acetate, lead oxide, lead carbonate, titanium chloride, alkoxy titanium, germanium oxide, zirconium oxide, triethylamine, tetramethylpropylenediamine, tetramethylhexamethylenediamine and tolylenediamine. Among them, tin compound catalysts are preferable, and dibutyltin laurate is especially preferable.

The reaction conditions of the process (II) are not specifically limited. In the case of the reaction in the presence of a solvent, from the standpoint of obtaining the compound (B) that is the target substance and that is expressed by the general formula (iv) with a high yield and a high purity, the ratio of the precursor a to the compound having the reactive functional group such as the polyhydric alcohol or the polyamide is preferably not less than 0.1-fold mol, is more preferably not less than 0.2-fold mol and is especially preferably not less than 0.5-fold mol. From the above standpoint, the above ratio is preferably not greater than 10-fold mol, is more preferably not greater than 5-fold mol and is especially preferably not greater than 2-fold mol. The ratio of the precursor a to the compound having the reactive functional group in the above preferable range is likely to provide the effect of improving the gas barrier property of the present disclosure.

When a solvent is used for the reaction of the process (II), there is no limitation as long as the solvent used is a solvent that dissolves the compound having the reactive functional group and dissolves the precursor a and that does not substantially react with the compound or the precursor a. Concrete examples include dimethyl sulfoxide, dimethyl formamide, dimethyl acetoamide, tetrahydrofuran and chloroform. The reaction temperature depends on the boiling point of the solvent used. In general, in order to obtain a target substance with a high yield, the reaction temperature is preferably in a range of room temperature to 200°C and is more preferably in a range of room temperature to 150°C.

The reaction time depends on the reaction temperature. The reaction time is generally 0.1 hours to 48 hours and is preferably 1 hour to 24 hours.

Irrespective of the presence of a solvent or the absence of a solvent, this reaction using the catalyst described above shortens a polymerization time. The amount of the catalyst added is not specifically limited but is preferably 0.001 to 2 mol% and is more preferably 0.01 to 0.5 mol% relative to the total molar number of the above compound such as a polyhydric alcohol or a polyamide and the precursor a.

### (3) Polyhydric Alcohol (C)

The polyhydric alcohol (C) according to the embodiment includes a linear structure containing 1 to 10000 carbon atoms or a branched or cyclic structure containing 3 to 10000 carbon atoms, may include one or a plurality of at least one hetero atom selected from O, S, N, P, Cl, Br and F, and may further include at least one substituent, for example, a carbonyl group or an amide group derived from aldehydes, ketones and carboxylic acids. It is preferable that the polyhydric alcohol (C) includes a linear structure containing 1 to 1000 carbon atoms, a branched or cyclic structure containing 3 to 1000 carbon atoms, or two or more repeating structures containing 2 to 1000 carbon atoms. It is especially preferable that the polyhydric alcohol (C) includes the branched structure containing 3 to 1000 carbon atoms, since this is more likely to have the effect of improving the gas barrier property of the present disclosure. Concrete examples of the polyhydric alcohol including the linear structure containing 1 to 1000 carbon atoms, the branched or cyclic structure containing 3 to 1000 carbon atoms, or the two or more repeating structures containing 2 to 1000 carbon atoms include 2,2-dimethyl-1,3-propanediol, 2-hydroxxymethyl-2-methyl-1,3-propanediol, ethylene glycol, polyethylene glycol, glycerol, diglycerol, pentaglycerol, tetramethylolethane, neopentyl glycol, tetramethylolpropane, tris(hydroxymethyl) acetic acid, polymers (for example, polyethylene glycol, polypropylene glycol, and polytetramethylene glycol), copolymers (for example, polyhydric alcohols derived from polyacrylates and polymethacrylates having alkyl hydrocarbon side chain or polyethylene glycol side chain and copolymers including polyethylene, polyethylene glycol, polypropylene, polypropylene glycol or polytetramethylene glycol), monoethanolamine, monopropanolamine and 2-amino-1,3-propanediol. Among them, the polyhydric alcohol including the branched structure containing 3 to 1000 carbon atoms is preferable. It is preferable that the polyhydric alcohol includes a branched structure having an alcohol valence of 2 to 20 and more preferably 2 to 8. Concrete examples include sugar alcohols such as trimethylolpropane, pentaerythritol, dipentaerythritol, tripentaerythritol, glycerol, erythritol, D-mannitol, D-sorbitol, D- and L-arabitol, xylitol, iditol, talitol, allitol, altritol and guilitol and sugars such as cyclodextrin, D-mannose, glucose, galactose, sucrose, fructose, xylose, arabinose, threitol and D-gulono-γ-lactone. Especially preferable are pentaerythritol, dipentaerythritol, tripentaerythritol, D-mannose, glucose, galactose, sucrose, fructose, xylose, arabinose, D-mannitol, D-sorbitol, and D- and L-arabitol.

### (4) Thermoplastic Resin Composition

The thermoplastic resin composition according to the embodiment is obtained by mixing 0.1 to 50 parts by weight of the compound (B) with 100 parts by weight of the thermoplastic resin (A). The mixing amount of the compound (B) out of this range does not provide the high effect of improving the gas barrier property that is the object of the present disclosure. From the standpoint of effectively providing the effect of improving the gas barrier property without damaging the intrinsic mechanical properties of the thermoplastic resin, the lower limit of the mixing amount of the compound (B) is preferably not less than 0.5 parts by weight. From the above standpoint, the upper limit of the mixing amount of the compound (B) is preferably not greater than 20 parts by weight and is more preferably not greater than 15 parts by weight.

The thermoplastic resin composition of the embodiment may be obtained by further mixing 0.1 to 50 parts by weight of the polyhydric alcohol (C). When the mixing amount of the polyhydric alcohol (C) is in this range, the compound (B) tends to be homogeneously dispersed in the thermoplastic resin (A). As a result, it is expected that adding the polyhydric alcohol (C) is more likely to provide the high effect of improving the gas barrier property that is the object of the present disclosure. From the standpoint of effectively providing the effect of improving the gas barrier property without damaging the intrinsic mechanical properties of the thermoplastic resin, the lower limit of the mixing amount of the polyhydric alcohol (C) is preferably not less than 0.5 parts by weight. From the above standpoint, the upper limit of the mixing amount of the polyhydric alcohol (C) is preferably not greater than 20 parts by weight and is more preferably not greater than 15 parts by weight.

The crystallinity of the thermoplastic resin composition may be evaluated by the crystallization rate and the degree of crystallinity. An index indicating the crystallization rate is a melt crystallization temperature (Tc). The higher Tc provides the higher crystallization rate and shortens the molding cycle, thereby providing the better moldability. An index indicating the degree of crystallinity is a melt crystallization enthalpy (ΔHc). The higher ΔHc is preferable since this provides the higher degree of crystallinity and improves the mechanical properties. Tc and ΔHc of the thermoplastic resin composition may be determined by a method described below. The method weighs 5 to 7 mg of a thermoplastic resin composition or a thermoplastic resin that is an object to be evaluated, measures the thermoplastic resin composition or the thermoplastic resin in a nitrogen atmosphere at a temperature rise rate of 20°C/ minute from room temperature to observe an endothermic peak temperature (Tm1), subsequently keeps the thermoplastic resin composition or the thermoplastic resin at a temperature of Tm1+20°C for five minutes, and then cools down the thermoplastic resin composition or the thermoplastic resin at a temperature fall rate of 20°C/ minute to room temperature. Tc (melt crystallization temperature) denotes a peak top of an exothermic peak, and ΔHc (melt crystallization enthalpy) denotes an area of the exothermic peak.

The thermoplastic resin composition according to the embodiment may be produced, for example, by methods described below:
(α) A method of mixing 100 parts by weight of at least one thermoplastic resin (A) with 0.1 to 50 parts by weight of the compound (B) in a heat melting condition or a method of mixing in a solution condition; and
(β) A method of mixing 100 parts by weight of at least one thermoplastic resin (A) with 0.1 to 50 parts by weight of the compound (B) and 0.1 to 50 parts by weight of the polyhydric alcohol (C) in a heat melting condition or a method of mixing in a solution condition.

Especially the method of mixing in the heat melting condition is more preferably employed, in terms of no requirement for a solvent and a simple production process. A generally known method may be employed as the method of mixing in the heat melting condition. For example, the method (α) supplies the thermoplastic resin (A) and the compound (B) to an extruder or the like with or without premixing and kneads the mixture in a temperature range of the melting point of the thermoplastic resin (A) + 5°C to 50°C. The method (β) supplies the thermoplastic resin (A), the compound (B) and the polyhydric alcohol (C) to an extruder or the like with or without premixing and kneads the mixture in a temperature range of the melting point of the thermoplastic resin (A) + 5°C to 50°C. The kneading temperature is preferably in a temperature range of 100°C to 400°C, from the viewpoint of the thermal stability of the compound (B) or the polyhydric alcohol (C).

In the above production method, for example, a single screw extruder, a twin screw extruder, or a tri-screw extruder provided with a "uni-melt" type screw or a kneader may be employed.

Furthermore, a filler may be further mixed in the thermoplastic resin composition according to the embodiment in such a range that does not damage the advantageous effects of the present disclosure. The filler may be mixed, for example, in the melt kneading process described above. The filler to be mixed may be, for example, glass fiber, carbon fiber, graphite fiber, aramid fiber, silicon carbide fiber, alumina fiber or boron fiber. The mixing amount of the filler is preferably not less than 1 part by weight and is more preferably not less than 10 parts by weight relative to 100 parts by weight of the polyamide resin. The mixing amount of the filler is also preferably not greater than 100 parts by weight and is more preferably not greater than 80 parts by weight relative to 100 parts by weight of the polyamide resin. The mixing amount of the filler in the above preferable range preferably enables the filler to provide the effect of improving the intensity and the rigidity.

The following compounds may further be added to the thermoplastic resin composition of the embodiment for the purpose of modification: plasticizers such as polyalkylene oxide oligomer-based compounds, thioether-based compounds, ester-based compounds and organophosphorus-based compounds; crystal nucleating agents such as organophosphorus compounds and poly(ether ether ketone); mold release agents such as montanic acid waxes, ethylene diamine-stearic acid-sebacic acid polycondensates and silicone-based compounds; coloring inhibitors such as hypophosphites; and other conventional additives including lubricants, ultraviolet ray inhibitors, coloring agents and foaming agents. According to the embodiment of the present disclosure, when the mixing amount of any of the above compounds exceeds 20 parts by weight of the entire composition, this undesirably damages the intrinsic characteristics of the thermoplastic resin. The mixing amount is thus preferably not greater than 10 parts by weight and is more preferably not greater than 1 part by weight.

In the melt kneading process described above, there is no limitation in the sequence of mixing the raw materials. The melt kneading method employed may be any of a method that mixes all raw materials and then melt kneads all the raw materials by the above method, a method that mixes part of the raw materials, subsequently melt kneads the part of the raw materials by the above method and then mixes and melt kneads the remaining raw materials, and a method that mixes part of the raw materials and then mixes the remaining raw materials by using a side feeder in the melt kneading process of the part of the raw materials with a single screw extruder or a twin screw extruder. With regard to a component that is to be added by only a small amount, an available method may add the component after kneading the other components by the above method or the like and pelletizing the kneaded components and may subsequently mold all the components.

A method of compressing the composition in a solid state to a tablet form and causing the compressed composition to molding such as injection molding may be employed for the composition according to the embodiment.

The thermoplastic resin composition obtained according to the embodiment may be widely used as a molded product. Examples of the molded product include films, sheets, fibers, cloths, nonwoven fabrics, injection molded products, extrusion molded products, vacuum/ pressure molded products, blow molded products and composites with other materials. Examples

The following more specifically describes the present disclosure with reference to examples. These examples are, however, only illustrative and are not restrictive.

### (1) Evaluation of Gas Barrier Property

Pellets of each thermoplastic resin composition were press-formed at the melting point of a thermoplastic resin (A) included in the pellets of the thermoplastic resin composition + 20°C, and a film molded product of 150 µm in thickness was obtained. The hydrogen permeability coefficient of the obtained film molded product was measured at 35°C by using a gas and water vapor permeation analysis system (GTR-30XATK, G6800T·F).

### (2) Melt Crystallization Temperature (Tc) and Melt Crystallization Enthalpy

Five to seven milligrams of a thermoplastic resin composition or a thermoplastic resin obtained in each of Examples and Comparative Examples were weighed and were measured in a nitrogen atmosphere at a temperature rise rate of 20°C/ minute from room temperature to observe an endothermic peak temperature (Tm1) by using a differential scanning calorimeter (DSC Q20) manufactured by TA Instruments. After the observation of the endothermic peak temperature (Tm1), the thermoplastic resin composition or the thermoplastic resin was kept at a temperature of Tm1+20°C for five minutes and was then cooled down at a temperature fall rate of 20°C/ minute to room temperature. A peak top of an exothermic peak was specified as Tc (melt crystallization temperature), and an area of the exothermic peak was specified as ΔHc (melt crystallization enthalpy).

### (Reference Example 1)

In a flask equipped with a nitrogen line, 12 g (96 mmol) of 6-methylisocytosine and 100 g (595 mmol) of hexamethylene diisocyanate that was approximately 6-fold mol relative to 6-methylisocytosine were placed and were made to react with stirring at 100°C for 24 hours in a nitrogen gas stream. After the reaction for 24 hours, 1 L of cyclohexane was added to the reaction solution, and a solid component was separated by filtration. A white solid was obtained (yield of 97%) by washing the solid component five times with dehydrated acetone and drying the solid component in vacuum at room temperature for 12 hours. The obtained white solid was confirmed by ¹H-NMR analysis to be a target substance having a structure shown below:

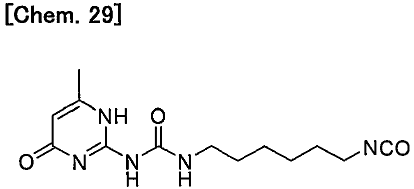

### (Reference Example 2)

In a flask equipped with a nitrogen line, 12 g (96 mmol) of 6-methylisocytosine, 132 g (595 mmol) of isophorone diisocyanate that was approximately 6-fold mol relative to 6-methylisocytosine, and 20 mL of chloroform were placed and were made to react with stirring at 60°C for 48 hours in a nitrogen gas stream. After the reaction for 48 hours, 200 mL of t-butyl ether was added to the reaction solution, and a solid component was separated by filtration. A white solid was obtained (yield of 78%) by washing the solid component five times with dehydrated acetone and drying the solid component in vacuum at room temperature for 12 hours. The obtained white solid was confirmed by ¹H-NMR analysis to be a target substance having a structure shown below:

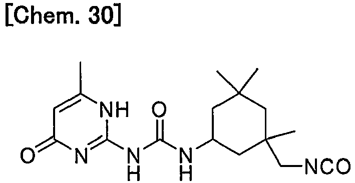

### (Reference Example 3)

In a flask equipped with a nitrogen line, 9 g (96 mmol) of 2-aminopyridine and 100 g (595 mmol) of hexamethylene diisocyanate that was approximately 6-fold mol relative to 2-aminopyridine were placed. A white solid was obtained (yield of 94%) by the same procedure as that of Reference Example 1 except the reaction temperature of 50°C. The obtained white solid was confirmed by ¹H-NMR analysis to be a target substance having a structure shown below:

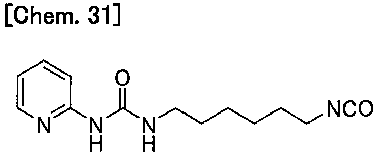

### (Reference Example 4)

In a flask equipped with a nitrogen line, 13 g (103 mmol) of melamine, 5.8 g (34 mmol) of hexamethylene diisocyanate that was approximately 1/3-fold mol relative to melamine, and 50 mL of dimethyl sulfoxide were placed. A white solid was obtained (yield of 52%) by the same procedure as that of Reference Example 1 except the reaction temperature of 50°C. The obtained white solid was confirmed by ¹H-NMR analysis to be a target substance having a structure shown below:

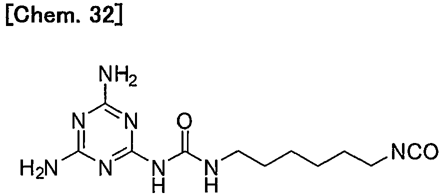

### (Reference Example 5)

In a flask equipped with a nitrogen line, 9 g (97 mmol) of aniline and 100 g (595 mmol) of hexamethylene diisocyanate that was approximately 6-fold mol relative to aniline were placed. A white solid was obtained (yield of 90%) by the same procedure as that of Reference Example 1 except the reaction at room temperature. The obtained white solid was confirmed by ¹H-NMR analysis to be a target substance having a structure shown below:

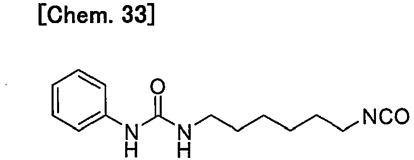

### (Reference Example 6)

In a flask equipped with a nitrogen line, 2.0 g (6.8 mmol) of the white solid obtained in Reference Example 1, 6.8 g (3.4 mmol) of polyethylene glycol (average molecular weight of 2000) and 80 mL of dimethyl sulfoxide were placed and were made to react at 90°C for 6 hours. After the reaction for 6 hours, the reaction solution was added dropwise to methanol, and a solid component was separated by filtration. A yellowish white solid was obtained by washing the solid component five times with methanol and drying the solid component in vacuum at 40°C for 12 hours. The obtained yellowish white solid was confirmed by ¹H-NMR analysis to be a target substance having a structure that is derived from the compound obtained in Reference Example 1 and that is capable of forming four hydrogen bonds.

### (Reference Example 7)

In a flask equipped with a nitrogen line, 2.0 g (5.8 mmol) of the white solid obtained in Reference Example 2, 5.8 g (2.9 mmol) of polyethylene glycol (average molecular weight of 2000) and 80 mL of dimethyl sulfoxide were placed and were made to react at 90°C for 6 hours. After the reaction for 6 hours, the reaction solution was added dropwise to methanol, and a solid component was separated by filtration. A yellowish white solid was obtained by washing the solid component five times with methanol and drying the solid component in vacuum at 40°C for 12 hours. The obtained yellowish white solid was confirmed by ¹H-NMR analysis to be a target substance having a structure that is derived from the compound obtained in Reference Example 2 and that is capable of forming four hydrogen bonds.

### (Reference Example 8)

In a flask equipped with a nitrogen line, 5.7 g (21.7 mmol) of the white solid obtained in Reference Example 3, 0.9 g (5.4 mmol) of diglycerol, and 70 mL of dimethyl sulfoxide were placed and were made to react at 90°C for 6 hours. After the reaction for 6 hours, the reaction solution was added dropwise to methanol, and a solid component was separated by filtration. A yellowish white solid was obtained by washing the solid component five times with methanol and drying the solid component in vacuum at 80°C for 12 hours. The obtained yellowish white solid was confirmed by ¹H-NMR analysis to be a target substance having a structure that is derived from the compound obtained in Reference Example 3 and that is capable of forming two hydrogen bonds.

### (Reference Example 9)

In a flask equipped with a nitrogen line, 7.4 g (25.1 mmol) of the white solid obtained in Reference Example 4, 0.9 g (5.0 mmol) of D-mannitol and 80 mL of dimethyl sulfoxide were placed and were made to react at 90°C for 6 hours. After the reaction for 6 hours, the reaction solution was added dropwise to methanol, and a solid component was separated by filtration. A yellowish white solid was obtained by washing the solid component five times with methanol and drying the solid component in vacuum at 80°C for 12 hours. The obtained yellowish white solid was confirmed by ¹H-NMR analysis to be a target substance having a structure that is derived from the compound obtained in Reference Example 4 and that is capable of forming two hydrogen bonds.

### (Reference Example 10)

In a flask equipped with a nitrogen line, 0.7 g (2.5 mmol) of the white solid obtained in Reference Example 4, 2.5 g (1.3 mmol) of polyethylene glycol (average molecular weight of 2000) and 40 mL of dimethyl sulfoxide were placed and were made to react at 90°C for 6 hours. After the reaction for 6 hours, the reaction solution was added dropwise to methanol, and a solid component was separated by filtration. A yellowish white solid was obtained by washing the solid component five times with methanol and drying the solid component in vacuum at 80°C for 12 hours. The obtained yellowish white solid was confirmed by ¹H-NMR analysis to be a target substance having a structure that is derived from the compound obtained in Reference Example 4 and that is capable of forming two hydrogen bonds.

### (Reference Example 11)

In a flask equipped with a nitrogen line, 4.0 g (13.6 mmol) of the white solid obtained in Reference Example 1, 0.6 g (2.3 mmol) of dipentaerythritol and 50 mL of dimethyl sulfoxide were placed and were made to react at 90°C for 6 hours. After the reaction for 6 hours, the reaction solution was added dropwise to methanol, and a solid component was separated by filtration. A yellowish white solid was obtained by washing the solid component five times with methanol and drying the solid component in vacuum at 40°C for 12 hours. The obtained white solid was confirmed by ¹H-NMR analysis to be a target substance having a structure that is derived from the compound obtained in Reference Example 1 and that is capable of forming four hydrogen bonds.

### (Reference Example 12)

In a flask equipped with a nitrogen line, 4.0 g (11.5 mmol) of the white solid obtained in Reference Example 2, 0.4 g (2.9 mmol) of pentaerythritol and 50 mL of dimethyl sulfoxide were placed and were made to react at 90°C for 6 hours. After the reaction for 6 hours, the reaction solution was added dropwise to methanol, and a solid component was separated by filtration. A yellowish white solid was obtained by washing the solid component five times with methanol and drying the solid component in vacuum at 40°C for 12 hours. The obtained white solid was confirmed by ¹H-NMR analysis to be a target substance having a structure that is derived from the compound obtained in Reference Example 2 and that is capable of forming four hydrogen bonds.

### (Reference Example 13)

In a flask equipped with a nitrogen line, 5.7 g (21.7 mmol) of the white solid obtained in Reference Example 3, 1.0 g (2.7 mmol) of tripentaerythritol and 70 mL of dimethyl sulfoxide were placed and were made to react at 90°C for 6 hours. After the reaction for 6 hours, the reaction solution was added dropwise to methanol, and a solid component was separated by filtration. A yellowish white solid was obtained by washing the solid component five times with methanol and drying the solid component in vacuum at 80°C for 12 hours. The obtained white solid was confirmed by ¹H-NMR analysis to be a target substance having a structure that is derived from the compound obtained in Reference Example 3 and that is capable of forming two hydrogen bonds.

### (Reference Example 14)

In a flask equipped with a nitrogen line, 5.7 g (21.7 mmol) of the white solid obtained in Reference Example 3, 2.0 g (5.4 mmol) of tripentaerythritol and 70 mL of dimethyl sulfoxide were placed and were made to react at 90°C for 6 hours. After the reaction for 6 hours, the reaction solution was added dropwise to methanol, and a solid component was separated by filtration. A yellowish white solid was obtained by washing the solid component five times with methanol and drying the solid component in vacuum at 80°C for 12 hours. The obtained white solid was confirmed by ¹H-NMR analysis to be a target substance having a structure that is derived from the compound obtained in Reference Example 3 and that is capable of forming two hydrogen bonds.

### (Reference Example 15)

In a flask equipped with a nitrogen line, 2.1 g (8.0 mmol) of the white solid obtained in Reference Example 5, 0.5 g (2.0 mmol) of diglycerol, and 20 mL of dimethyl sulfoxide were placed and were made to react at 90°C for 6 hours. After the reaction for 6 hours, the reaction solution was added dropwise to methanol, and a solid component was separated by filtration. A yellowish white solid was obtained by washing the solid component five times with methanol and drying the solid component in vacuum at 80°C for 12 hours. The obtained yellowish white solid was confirmed by ¹H-NMR analysis to be a target substance having a structure that is derived from the compound obtained in Reference Example 5.

### (Reference Example 16)

In a flask equipped with a nitrogen line, 2.7 g (32 mmol) of 3-amino-1,2,4-triazole, 2.7 g (16 mmol) of hexamethylene diisocyanate that was approximately 1/2-fold mol relative to 3-amino-1,2,4-triazole, and 10 mL of dimethyl sulfoxide were placed and were made to react under ice cooling for 2 hours. After the reaction for 2 hours, 400 mL of acetone was added to the reaction solution, and a solid component was separated by filtration. A white solid was obtained (yield of 46%) by washing the solid component five times with acetone and drying the solid component in vacuum at 80°C for 12 hours. The obtained white solid was confirmed by ¹H-NMR analysis to be a target substance having a structure shown below:

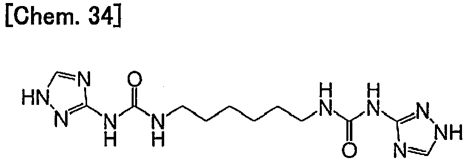

### (Reference Example 17)

In a flask equipped with a nitrogen line, 8.1 g (96 mmol) of 3-amino-1,2,4-triazole and 100 g (595 mmol) of hexamethylene diisocyanate that was approximately 6-fold mol relative to 3-amino-1,2,4-triazole were placed and were made to react with stirring at room temperature for 15 minutes in a nitrogen gas stream. After the reaction for 15 minutes, the reaction solution was added dropwise to a mixed solvent of 150 mL of dehydrated acetone and 450 mL of hexane, and a solid component was separated by filtration. A white solid was obtained (yield of 13%) by washing the solid component five times with dehydrated acetone and drying the solid component in vacuum at room temperature for 12 hours. The obtained white solid was confirmed by ¹H-NMR analysis to be a target substance having a structure shown below:

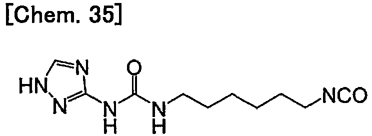

### (Reference Example 18)

In a flask equipped with a nitrogen line, 1.5 g (6 mmol) of the white solid obtained in Reference Example 17, 0.3 g (2 mmol) of diglycerol and 10 mL of dimethyl sulfoxide were placed and were made to react at room temperature for 4 hours. After the reaction for 4 hours, the reaction solution was added dropwise to a mixed solvent of 100 mL of acetone and 300 mL of hexane, and a solid component was separated by filtration. A white solid was obtained by washing the solid component five times with methanol and drying the solid component in vacuum at 80°C for 12 hours. The obtained white solid was confirmed by ¹H-NMR analysis to be a target substance having a structure shown below:

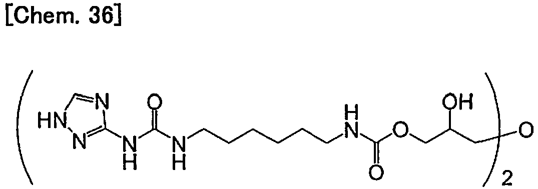

### (Reference Example 19)

In a flask equipped with a nitrogen line, 2.0 g (8 mmol) of the white solid obtained in Reference Example 17, 0.2 g (1.3 mmol) of diglycerol and 10 mL of dimethyl sulfoxide were placed and were made to react at room temperature for 4 hours. After the reaction for 4 hours, the reaction solution was added dropwise to a mixed solvent of 100 mL of acetone and 300 mL of hexane, and a solid component was separated by filtration. A white solid was obtained by washing the solid component five times with methanol and drying the solid component in vacuum at 80°C for 12 hours. The obtained white solid was confirmed by ¹H-NMR analysis to be a target substance having a structure shown below:

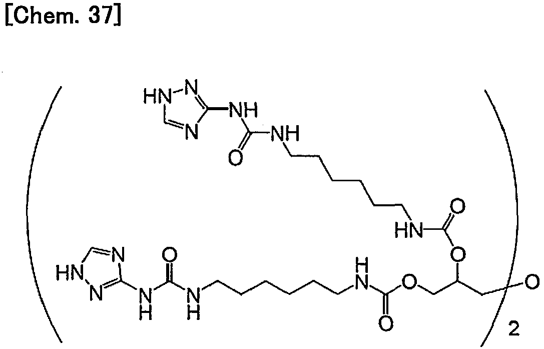

### (Reference Example 20)

In a flask equipped with a nitrogen line, 2.1 g (8.0 mmol) of the white solid obtained in Reference Example 5, 0.5 g (2.0 mmol) of diglycerol and 20 mL of dimethyl sulfoxide were placed and were made to react at 90°C for 6 hours. After the reaction for 6 hours, the reaction solution was added dropwise to methanol, and a solid component was separated by filtration. A yellowish white solid was obtained by washing the solid component five times with methanol and drying the solid component in vacuum at 80°C for 12 hours. The obtained yellowish white solid was confirmed by ¹H-NMR analysis to be a target substance having a structure shown below:

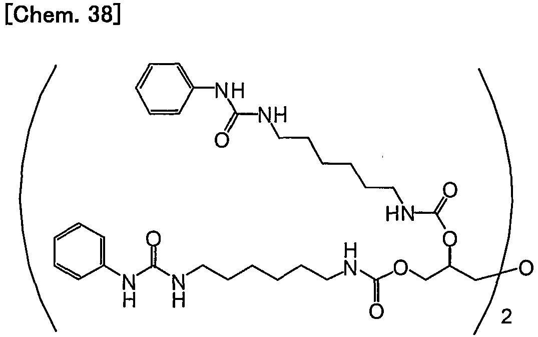

The following shows raw materials used in Examples and Comparative Examples:
(A-1) polyamide 6: CM1010 (manufactured by Toray Industries, Inc.)
(A-2) polyethylene terephthalate: T900E (manufactured by Toray Industries, Inc.)
(A-3) polyethylene terephthalate: 1200S (manufactured by Toray Industries, Inc.)
(B-1) pyridone (manufactured by Tokyo Chemical Industry Co., Ltd.)
(B-2) compound obtained in Reference Example 6
(B-3) compound obtained in Reference Example 7
(B-4) compound obtained in Reference Example 8
(B-5) compound obtained in Reference Example 9
(B-6) compound obtained in Reference Example 10
(B-7) compound obtained in Reference Example 11
(B-8) compound obtained in Reference Example 12
(B-9) compound obtained in Reference Example 13
(B-10) compound obtained in Reference Example 14
(B-11) 6-methylisocytosine (manufactured by Tokyo Chemical Industry Co., Ltd.)
(B-12) 2-aminopyridine (manufactured by Tokyo Chemical Industry Co., Ltd.)
(B-13) compound obtained in Reference Example 16
(B-14) compound obtained in Reference Example 18
(B-15) compound obtained in Reference Example 19
(C-1) dipentaerythritol (manufactured by Tokyo Chemical Industry Co., Ltd.)
(C-2) D-mannitol (manufactured by Tokyo Chemical Industry Co., Ltd.)
(D-1) 4,4'-dihydroxybiphenyl (manufactured by Tokyo Chemical Industry Co., Ltd.)
(D-2) compound obtained in Reference Example 15
(D-3) compound obtained in Reference Example 20

### (Examples 1 - 16 and Comparative Examples 1 - 7)

Respective raw materials were supplied and melt kneaded to provide compositions shown in Table 1 and Table 2 by using a twin screw extruder (HAAKE MiniLab II micro pounder manufactured by Thermo Fisher Scientific). The screw rotation speed was 200 rpm, and the kneading time was 10 minutes after a start of supplying raw materials. Extruded guts were pelletized and were processed by hot pressing to a film of 150 µm in thickness as a sample for evaluation of the gas barrier property.

### [Table 1]

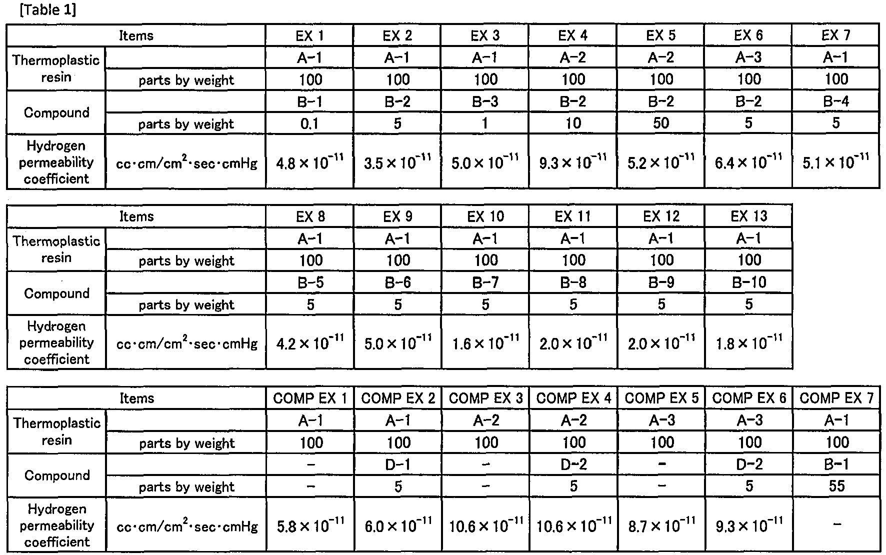

Comparison of Examples 1 to 13 and Comparative Examples 1 to 6 clearly shows that the thermoplastic resin composition including the compound (B) having the functional group R that is capable of forming two or more hydrogen bonds has the effect of decreasing the hydrogen permeability coefficient, i.e., the effect of improving the hydrogen gas barrier property. Especially, Examples 8 and 10 to 13 clearly show that the thermoplastic resin composition including the compound (B) having the branched structure has a small hydrogen permeability coefficient and has excellent hydrogen gas barrier property. Comparative Example 7 having the mixing amount of the compound (B) of greater than 50 parts by weight relative to 100 parts by weight of the thermoplastic resin (A) gave a fragile film and was not able to evaluate the hydrogen permeability coefficient.

### [Table 2]

**[Table 2]**

| Items | | EX 14 | EX 15 | EX 16 |
|---|---|---|---|---|
| Thermoplastic resin | | A-1 | A-1 | A-1 |
| | parts by weight | 100 | 100 | 100 |
| Compound | | B-11 | B-12 | B-11 |
| | parts by weight | 3 | 3 | 3 |
| Polyhydric alcohol | | C-1 | C-1 | C-2 |
| | parts by weight | 2 | 10 | 0.5 |
| Hydrogen permeability coefficient | cc·cm/cm²·sec·cmHg | 2.2 × 10⁻¹¹ | 3.5 × 10⁻¹¹ | 3.2 × 10⁻¹¹ |

Comparison of Examples 14 to 16 and Comparative Examples 1 to 6 clearly shows that further adding the polyhydric alcohol (C) in addition to the compound (B) having the functional group R that is capable of forming two or more hydrogen bonds also has the effect of decreasing the hydrogen permeability coefficient of the thermoplastic resin composition, i.e., the effect of improving the hydrogen gas barrier property.

### (Examples 17 - 22 and Comparative Examples 8 - 10)

Respective raw materials were supplied and melt kneaded to provide compositions shown in Table 3 and Table 4 by using a twin screw extruder (HAAKE MiniLab II micro pounder manufactured by Thermo Fisher Scientific). The screw rotation speed was 200 rpm, and the kneading time was 10 minutes after a start of supplying raw materials. Extruded guts were pelletized and were processed by hot pressing to a film of 150 µm in thickness as a sample for evaluation of the gas barrier property.

### [Table 3]

**[Table 3]**

| | | EX 17 | EX 18 | EX 19 | EX 20 | EX 21 | EX 22 |
|---|---|---|---|---|---|---|---|
| Thermoplastic resin | | A-1 | A-1 | A-1 | A-1 | A-1 | A-1 |
| | parts by weight | 100 | 100 | 100 | 100 | 100 | 100 |
| Compound | | B-13 | B-13 | B-14 | B-14 | B-15 | B-15 |
| | parts by weight | 1 | 5 | 0.5 | 5 | 5 | 10 |
| Hydrogen permeability coefficient | cc·cm/cm²·sec·cmHg | 5.1 × 10⁻¹¹ | 4.7 × 10⁻¹¹ | 5.3 × 10⁻¹¹ | 4.7 × 10⁻¹¹ | 4.8 × 10⁻¹¹ | 4.2 × 10⁻¹¹ |
| Melt crystallization temperature (Tc) | °C | 181 | 181 | 179 | 180 | 180 | 180 |
| Melt crystallization enthalpy (Δ Hc) | J/g | 75 | 76 | 75 | 77 | 77 | 76 |

### [Table 4]

**[Table 4]**

| | | COMP EX 8 | COMP EX 9 | COMP EX 10 |
|---|---|---|---|---|
| Thermoplastic resin | | A-1 | A-1 | A-1 |
| | parts by weight | 100 | 100 | 100 |
| Compound | | - | D-1 | D-3 |
| | parts by weight | - | 5 | 5 |
| Hydrogen permeability coefficient | cc·cm/cm² ·sec·cmHg | 5.8 × 10⁻¹¹ | 6.0 × 10⁻¹¹ | 5.8 × 10⁻¹¹ |
| Melt crystallization temperature (T c) | °C | 161 | 168 | 167 |
| Melt crystallization enthalpy (Δ Hc) | J/g | 67 | 69 | 70 |

Comparison of Examples 17 to 22 and Comparative Examples 8 to 10 clearly shows that the thermoplastic resin composition including the compound (B) having the functional group R that is capable of intermolecularly forming two or more hydrogen bonds has the effect of decreasing the hydrogen permeability coefficient, i.e., the effect of improving the hydrogen gas barrier property. Increasing the melt crystallization temperature indicates an increase in the crystallization rate. Increasing the melt crystallization enthalpy (ΔHc) indicates an increase in the degree of crystallinity and improvement of the mechanical properties.

## Claims

1. A thermoplastic resin composition, comprising:
100 parts by weight of at least one thermoplastic resin (A); and
0.1 to 50 parts by weight of a compound (B) intramolecularly including at least one functional group R (where a plurality of functional groups R optionally have structures identical with each other or structures different from each other) having a hydrogen bond donor and/or a hydrogen bond acceptor that are capable of intermolecularly forming at least two or more hydrogen bonds.

2. The thermoplastic resin composition according to claim 1,
wherein the functional group R of the compound (B) has a heterocyclic structure including at least two different atoms selected from carbon atom, nitrogen atom and oxygen atom.

3. The thermoplastic resin composition according to either claim 1 or claim 2,
wherein the compound (B) has a structure expressed by a general formula (i) given below:
**[Chem. 1]** R₁-H ···(i).
(where R₁ includes the functional group R).

4. The thermoplastic resin composition according to any one of claims 1 to 3,
wherein the compound (B) is one of compounds expressed by formulae given below: 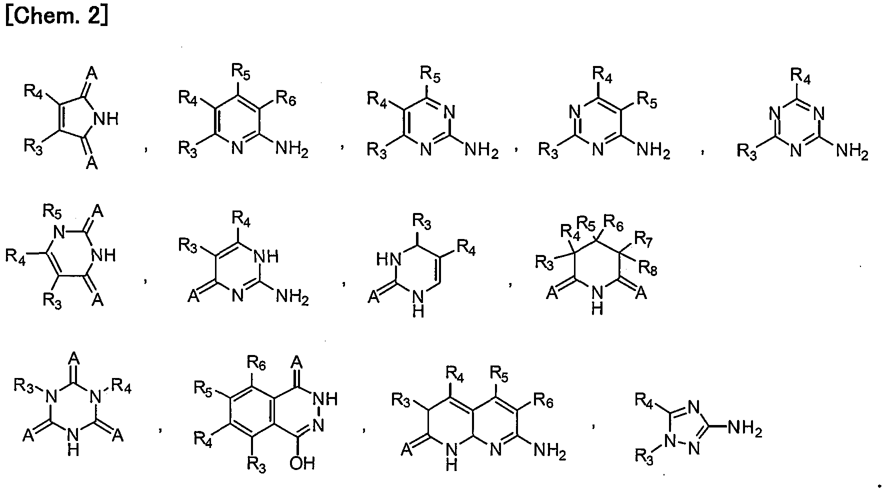 (where A denotes one selected from an oxygen atom, a sulfur atom and an NH group; and R₃, R₄, R₅, R₆, R₇ and R₈ are optionally identical with one another or different from one another and respectively denote one selected from a hydrogen atom, a linear alkyl group containing 1 to 20 carbon atoms, a branched alkyl group containing 3 to 20 carbon atoms, a cycloalkyl group containing 3 to 20 carbon atoms, Cl, Br, F, NH₂ and OH, wherein any of the linear alkyl group containing 1 to 20 carbon atoms, the branched alkyl group containing 3 to 20 carbon atoms, and the cycloalkyl group containing 3 to 20 carbon atoms optionally includes one or a plurality of at least one hetero atom selected from O, S, N, P, Cl, Br and F.)

5. The thermoplastic resin composition according to either claim 1 or claim 2,
wherein the compound (B) has a structure expressed by a general formula (ii) given below: 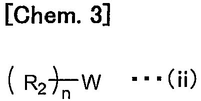 (where R₂ denotes a structure including the functional group R; n denotes an integral number of 1 to 20; and W denotes a structure including a hydrogen atom, a linear structure containing 1 to 10000 carbon atoms, or a branched or cyclic structure containing 3 to 10000 carbon atoms and optionally includes one or a plurality of at least one hetero atom selected from O, S, N, P, Cl, Br and F.)

6. The thermoplastic resin composition according to any one of claims 1, 2 and 5,
wherein the compound (B) has a structure expressed by a general formula (iv) given below: 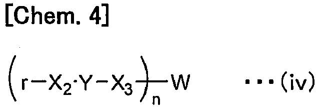 (where n denotes an integral number of 1 to 20: r has a heterocyclic structure including at least two different atoms selected from carbon atom, nitrogen atom and oxygen atom; r-X₂ includes the functional group; and W denotes a structure including a hydrogen atom, a linear structure containing 1 to 10000 carbon atoms, or a branched or cyclic structure containing 3 to 10000 carbon atoms and optionally includes one or a plurality of at least one hetero atom selected from O, S, N, P, Cl, Br and F, wherein X₂ and X₃ denote binding groups selected from groups given below and are optionally identical with each other or different from each other): 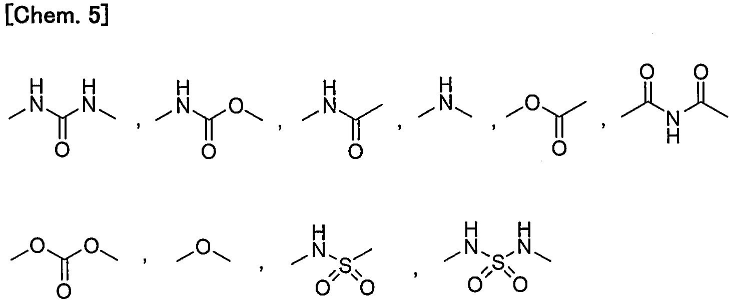 where Y denotes one of structures given below: 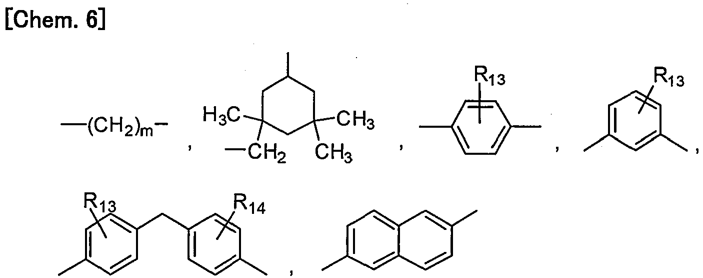 (where R₁₃ and R₁₄ respectively denote one selected from a hydrogen atom, a linear alkyl group containing 1 to 20 carbon atoms, a branched alkyl group containing 3 to 20 carbon atoms, and a cycloalkyl group containing 3 to 20 carbon atoms, and m denotes an integral number of 1 to 50.)

7. The thermoplastic resin composition according to either claim 5 or claim 6,
wherein the compound (B) includes two or more functional groups that have identical structures.

8. The thermoplastic resin composition according to any one of claims 5 to 7,
wherein the compound (B) has one of structures expressed by formulae given below: 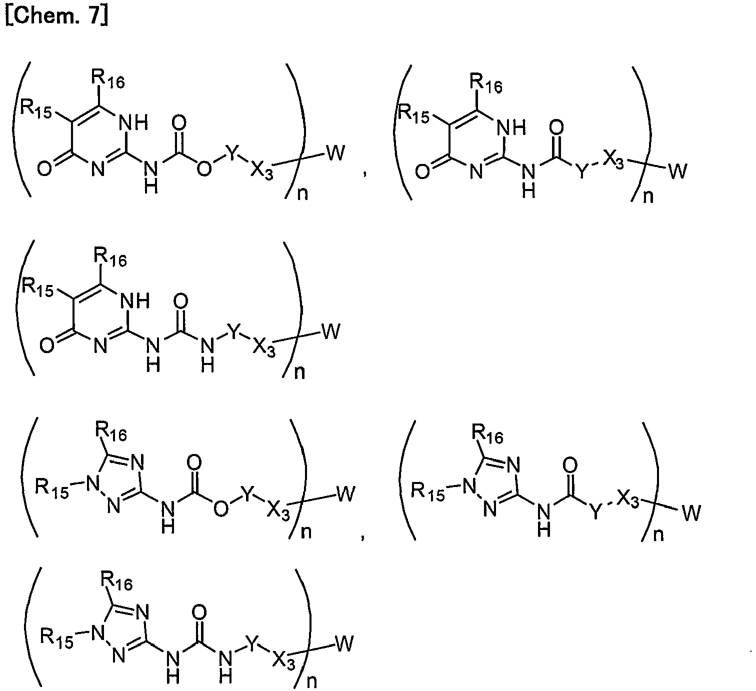 (where R₁₅ and R₁₆ respectively denote one selected from a hydrogen atom, a linear alkyl group containing 1 to 20 carbon atoms, a branched alkyl group containing 3 to 20 carbon atoms, and a cycloalkyl group containing 3 to 20 carbon atoms and optionally includes one or a plurality of at least one hetero atom selected from O, S, N, P, Cl, Br and F, and X₃ denotes a binding group selected from binding groups given below: 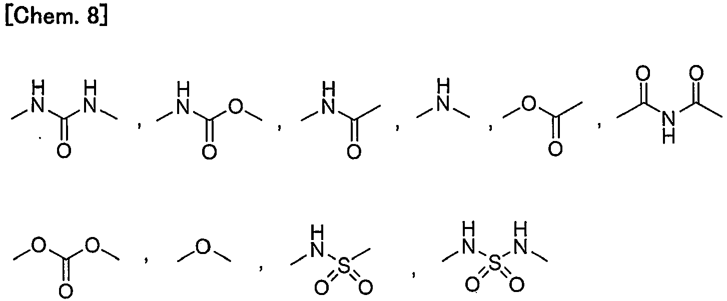 where Y denotes one of structures given below: 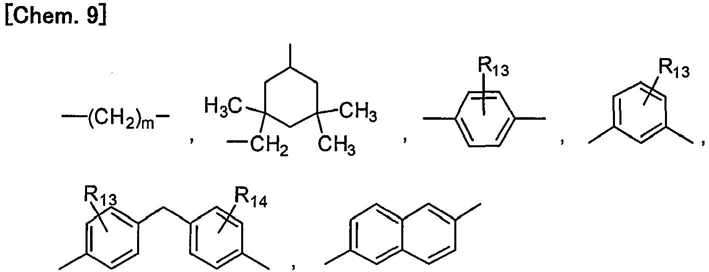 (where R₁₃ and R₁₄ respectively denote one selected from a hydrogen atom, a linear alkyl group containing 1 to 20 carbon atoms, a branched alkyl group containing 3 to 20 carbon atoms, and a cycloalkyl group containing 3 to 20 carbon atoms, and m denotes an integral number of 1 to 50,) where W denotes a structure including a hydrogen atom, a linear structure containing 1 to 10000 carbon atoms, or a branched or cyclic structure containing 3 to 10000 carbon atoms and optionally includes one or a plurality of at least one hetero atom selected from O, S, N, P, Cl, Br and F.

9. The thermoplastic resin composition according to any one of claims 5 to 8,
wherein the structure W includes a branched structure containing 3 to 1000 carbon atoms.

10. The thermoplastic resin composition according to any one of claims 5 to 9,
wherein the structure W includes a branched structure that contains 3 to 1000 carbon atoms and that is derived from a polyhydric alcohol.

11. The thermoplastic resin composition according to any one of claims 1 to 10, further comprising:
0.1 to 50 parts by weight of a polyhydric alcohol (C) containing 3 to 1000 carbon atoms.

12. The thermoplastic resin composition according to any one of claims 1 to 11,
wherein the thermoplastic resin (A) is at least one selected from polyamide, polyester, polyether imide, polyether ether ketone, liquid crystal polymer, polyamide-imide, polyimide, polyethylene, polystyrene, polypropylene, polyacetal, polycarbonate, polyarylate, polyphenylene sulfide, polyether sulfone, polysulfone, polyvinyl alcohol, and polyethylene/ vinyl alcohol copolymer.

13. A production method of the thermoplastic resin composition according to any one of claims 1 to 10,
the production method comprising:
mixing 100 parts by weight of the at least one thermoplastic resin (A) with 0.1 to 50 parts by weight of the compound (B) in a heat melting condition.

14. A production method of the thermoplastic resin composition according to claim 11,
the production method comprising:
mixing 100 parts by weight of the at least one thermoplastic resin (A) with 0.1 to 50 parts by weight of the compound (B) and 0.1 to 50 parts by weight of the polyhydric alcohol (C) in a heat melting condition.

15. A molded product of the thermoplastic resin composition according to any one of claims 1 to 12.
